# EUROPEAN PATENT APPLICATION

(11) **EP 3 029 960 A1**
(43) Date of publication of application: **08.06.2016**
(21) Application number: 14196604.4
(22) Date of filing: 05.12.2014
(51) Int. Cl.: H04W 4/00, H04W 4/02, H04W 4/20, H04W 12/06, H04W 12/08, H04L 29/06

(54) **Resource control apparatus, server apparatus and method for controlling a resource**

(71) Applicant: Greenspider gmbh, 90411 Nürnberg (DE)
(72) Inventor: Cantore, Alessandro, 90411 Nürnberg (DE)
(74) Representative: MFG Patentanwälte Meyer-Wildhagen Meggle-Freund Gerhard PartG mbB

(57) **Abstract**

A resource control apparatus (100, 100') is provided comprising a position determining device (101, 101') and a communication device (102, 102'). The position determining device (101) is adapted to determine position information of the resource control apparatus (100, 100') and the communication device (102, 102') is adapted to setup a first communication connection (103, 103') and a second communication connection (104). Furthermore, the first communication connection (103, 103') is independent from the second communication connection (104). The communication device (102) is further adapted to send the determined position information via both the first communication connection (103, 103') and second communication connection (104) and the communication device (102) is adapted to receive position information of another apparatus via the second communication connection (104). The communication device (102) is further adapted to send an identifier (UID, RID) of the resource control apparatus (100) via the second communication connection (104) and to receive an identifier (UID, RID) of the other apparatus (100') via the second communication connection (104). The identifier of the resource control apparatus (100) is an individual characteristic of the resource control apparatus (100) and the identifier of the other apparatus (100') is an individual characteristic of the other apparatus.

## Description

### Technical field of the invention

The invention relates to the technical field of security. In particular, the subject-matter of the present invention relates to the identification of users. The present invention describes a resource control apparatus, a method for controlling a resource, a server apparatus, a method for operating a server to grant access to a client, a program element and a computer readable medium.

### Background of the invention

A proximity technology has recently been developed. This technology is called Near Field Communication (NFC). Near field communication (NFC) is a set of standards for smartphones or similar devices to establish radio communication together by either touching them together or bringing them into the same proximity, usually within a few inches or centimetres. NFC standards cover communication protocols and data exchange formats, and are based on radio-frequency identification (RFID) standards.

NFC permits bi-directional information exchange between two NFC end-points. The standard document ISO/IEC 18092 describes one aspect of NFC. The NFC Forum also promotes NFC and certifies the compliance of devices with the standard and checks whether the criteria being considered as a personal area network is met. Near Field Communication is a technology currently supported by many smartphones.

Today mobile devices, like smartphones also comprise satellite receiver such as GNSS (Global Navigation Satellite System) receiver or GPS (Global Positioning System) receiver for receiving GNSS or GPS data.

Under the headline "share economy", it became a topic granting access to resources that are used by a plurality of different users or user groups.

### Summary of the invention

It may be desirable to provide an efficient access to resources.

According to an aspect of the present invention a resource control apparatus, a method for controlling a resource, a server apparatus, a method for operating a server, a program element and a computer readable medium are provided.

The subject-matter of the present invention is defined by the features of the independent claims. Further aspects and embodiments of the invention are provided in the dependent claims and in the following description.

An idea of the invention may be seen in the possibility to use NFC, in particular using a link employing an NFC protocol, as media, transport media or as a communication connection for exchanging position data between an end-user, i.e. a device operated by the end-user, a resource controller and a central server, that may be configured to support cloud services. In an example a resource control apparatus, a server apparatus and a method for mobile accessing and controlling of shared resources and/or a secure access key exchange method is provided.

An aspect of the invention may be providing an access grant method or a method for granting access based on the processing of a combination of data, in particular based on an accumulation of authorization factors. The data to be evaluated can be selected from a group of data and associated credentials, the group including user identity, user authentication information, a password, a personal identification number, additional identification information, such as a fingerprint, a retinal pattern, a voice, or other biometrical factor, a position of the user, a position of the requested resource, a "qualified" or "validated" position of the user or of the client and a time of the access request.

According to an aspect of the invention a resource control apparatus is described. The apparatus comprises a position determining device, e.g. a satellite receiver, and a communication device. The position determining device is adapted to determine position information of the resource control apparatus, wherein the communication device is adapted to setup a first communication connection and a second communication connection.

The first communication connection is independent of the second communication connection. In an example the first communication connection employs a different communication technology than the second communication connection. In another example the first communication connection and the second communication connection use the same hardware, however the first communication connection and the second communication are different independent logical connections such as a virtual connection. The communication device is further adapted to send the determined position information via both the first communication connection and second communication connection. In an example the transmission of the position information via both communication connections may be executed at the same time or at different times. The communication device may in an example be adapted to relay or forward position data received from a satellite over at least one of the communication connections. In another example the communication device is adapted to copy position information to the first connection and to the second connection.

Furthermore, the communication device is adapted to receive position information of another apparatus via the second communication connection. In addition to this, the communication device is also adapted to send an identifier of the resource control apparatus via the second communication connection and the communication device is adapted to receive an identifier of the other apparatus via the second communication connection. Said identifier of the resource control apparatus is an individual characteristic of the resource control apparatus and said identifier of the other apparatus is an individual characteristic of the other apparatus. The identifier can be used to distinguish the resource control apparatus from the other resource control apparatus. Said identifier can in particular help in identifying the source or the origin of information. By using such identifiers a function of a resource control apparatus can be distinguished. In an example the communication device can add the identifiers as tags to the position information. The identifier may identify the source of the position data or position information. In an example the identifier also comprise a timestamp in order to identify the time when the position data was generated.

According to another aspect of the present invention a further resource control apparatus may be provided, in particular an agent resource control apparatus or a passive resource control apparatus is provided. This agent resource control apparatus may be a particular implementation of a resource control apparatus having minimal configuration and/or may be free of a permanently connected power source. The resource control apparatus may comprise a position determining device and a communication device. The position determining device may be adapted to determine position information of the resource control apparatus. In an example the position determining device may comprise a memory or register for storing position information. The position information may be determined once the resource control apparatus is supplied with power, either externally or internally. The power may be provided by way of energy harvesting or via a communication connection. During the time where power is provided the resource control apparatus may determine and store position information. In another example the position information may be stored in the memory during installation of the resource control apparatus. In cases where the resource control apparatus can be installed in a substantially fixed position, power may be saved by only irregularly determining the position information. In other words, the position information may not permanently be determined and not always when contact with another resource control apparatus is established.

The communication device may be adapted to setup a communication connection, wherein the communication device may be further adapted to send the determined position information via the communication connection and to send an identifier of the resource control apparatus via the communication connection. The communication connection may be established with another resource control apparatus. The identifier of the resource control apparatus may be an individual characteristic of the resource control apparatus.

This minimum configuration of a resource control apparatus works in a comparable manner as any other resource control apparatus described in this text. The minimum configuration may in an example be passively operated and may receive power from an external power source or by energy harvesting, for example via the communication connection. The communication connection may be used to send out position information and an identifier to another resource apparatus as well as to a server apparatus.

The method for controlling a resource by the resource control apparatus in the minimum configuration may comprise determining position information of the resource control apparatus, e.g. of the agent resource control apparatus. The method further comprises setting up a communication connection, sending the determined position information via communication connection and sending an identifier, e.g. RID, of the method via the communication connection. The identifier of the method may be an individual characteristic related to the method.

According to another aspect of the present invention a method for controlling a resource is described. The method comprises the determining of position information of the location where the method is executed. In an example the method may comprise determining position information of a client requesting access to a resource location. The position information may relate to the location where the method is executed. In a further example the method may be executed as an application on a processor and therefore determines the position of the processor. The method further comprises setting up a first communication connection and a second communication connection, wherein the first communication connection is independent of the second communication connection. The method also provides for sending the determined position information via both the first communication connection and the second communication connection. In an example the information is copied from one communication connection to the other. Depending on the type of communication connection identical information may be copied to different protocols. The method comprises receiving position information of a location where another method for controlling a resource is executed via the second communication connection after the sending step and/or parallel to the sending step.

In order to distinguish the origin of information the method can send an identifier of the method, such as an UID, via the second communication connection and can receive an identifier of the other method, such as an RID, via the second communication connection, wherein the identifier of the method is an individual characteristic related to the method and wherein the identifier of the other method is an individual characteristic of the other method. The identifier may be derived from the hardware on which the method is running. By exchanging identifiers a relation between the method and the other method, between the user method and the remote method, between the user resource control apparatus and the remote resource control apparatus and/or between a master and a slave is generated. In an example for the second communication connection a technology with a predetermined maximum physical reachable distance is used and therefore information regarding the distance of end-points of the communication can be derived. By examining the distance of the connection that may be used for exchanging the identifiers, information can be generated about the distance between at least two apparatuses and/or between the places of the devices and/or applications on which the at least two methods run. The maximum scope, the maximum reach or the maximum range of the second communication connection may be used to verify the plausibility of the position data provided by the position determining devices of the method and the other method. The smaller the maximum reach or scope of the second communication connection the greater the accuracy if the positioning data or the positions are verified or compared. In an example the maximum specified reach or scope of the second connection or of a short range connection is less than the error tolerance of the position determining device.

According to another aspect of the invention a server apparatus is described. The server apparatus may form a cloud server and comprises a user data base, a resource database and a server communication device. These devices are connected with one another. The user database is adapted to store user related information of a first control apparatus or a first method, e.g. an UID, a status and a position of the UID or of the user of the resource control apparatus.

The resource database is adapted to store resource related information of a second resource apparatus or of a second method, e.g. an RID, a status, a position of the RID or of the resource linked to the other resource control apparatus.

The server communication device is adapted to set up a user communication connection with a first resource control apparatus and a resource communication connection with a second resource control apparatus in order to update user related information and/or to update resource related information. The server apparatus is further adapted to find a correlation and/or a relationship between the updated user related information and the updated resource related information. The server communication device is adapted to send control information based on the correlation and/or based on the relationship between the user related information and the resource related information via the user communication connection and/or via the resource communication connection. The relationship or correlation may be permission for a user control apparatus to access a resource or agent. The control information may display information to be shown on a client and/or a command to actuate an actuation device connected to an agent device and/or a command to grant access to a resource or to release the access to a resource. The access grant command can be converted into a physical action of an actuator. A correlation or relationship may be determined by using methods of data mining. In an example a correlation and/or a relationship between a user resource control apparatus and a remote resource control apparatus may be the local proximity between the user resource control apparatus and the remote resource control apparatus. The proximity may be determined by the radius within which a communication connection is effective. This radius may depend on the reachability and/or the range of a wireless connection such as a NFC connection. The relationship may be in one example give or provide information about a resource booking status.

In other words, the physical proximity is measured by the reachable distance of a connection. In case of NFC the connection is only effective within a distance of a few centimetres between a user resource control apparatus and a remote resource control apparatus . Consequently the physical properties of a communication connection may be taken as the measure for proximity or the distance between two apparatuses at the moment they can exchange information. If the exchange of information is combined with gathering the position information, the position data can be compared or verified within a tolerance range determined by the reachability or range of the connection.

According to another aspect of the invention a method for operating a server apparatus comprises providing a user data base, providing a resource database, storing resource related information in a resource database, storing user related information in a user database and setting up a user communication connection with a first resource control apparatus as well as setting up a resource communication connection with a second resource control apparatus. After the connections have been established, user related information is updated and/or upgraded and a search for finding a correlation or a relationship between the updated user related information and the resource related information is executed. Control information, such as access grant information, is sent based on the correlation between the user related information and the resource related information via the user communication connection and/or via the resource communication connection. For updating user related information and resource related information in an example an access request message or an access request acknowledgement message may be used. The update information may be exchanged in the form of a compound key.

According to another aspect of the invention a program element is provided, comprising program code, that is adapted, when executed on a processor, to execute at least one of the methods of the invention.

According to yet another aspect of the invention a computer readable medium is described, comprising program code, that is adapted, when executed on a processor, to execute at least one of the inventive methods.

A computer-readable medium may be a floppy disk, a hard disk, an USB (Universal Serial Bus) storage device, a RAM (Random Access Memory), a ROM (read only memory) or an EPROM (Erasable Programmable Read Only Memory). A computer readable medium may also be a data communication network, e.g. the Internet, which may allow the downloading of a program code.

A program code can be stored in the form of an application, in particular as an application, applet or a local agent for a mobile device such as a tablet computer or a smartphone or for an embedded system. The application may be provided in a web store.

The described resource control apparatus the method for controlling a resource, the server apparatus and/or the method for operating a server may allow for providing access to generic resources and releasing generic resources, on the basis of the identity and the position of a user or the corresponding equipment of a user.

The described subject-matters may enable using of different access grant criteria. Access criteria are for example the position of the user and the position of the resource. An access criteria may also be a condition such as the requirement that position information of a first resource control apparatus and the position information of a second resource control apparatus do not differ more than a distance value defined by the range or scope of a second communication connection, e.g. a short range connection or an NFC connection, at a certain time or time window around the time when the information has been gathered. The access criteria are associated to personal identification factors and thus the access criteria can be used in a way to maximise security, flexibility, resiliency, robustness of the access grant method.

In particular, NFC may be a suitable medium to exchange user identity data, combined with other data, authentication factors, positions and status parameter of the client and the resources necessary to determine the access. This data is exchanged between the resource control apparatus of a user or of a client application, and the resource control apparatus which controls the resource when they are in touchless proximity, e.g. in the radius, area, proximity or range of a few inches. The resource control apparatus of a user may be implemented as a user application and the resource control apparatus which controls a resource may be implemented as an agent.

In this text, the resource control apparatus of a user may be named "user" or "client" and the control apparatus that is connected with a resource may be named "agent" or "the resource control apparatus". Both, the user control apparatus and the agent resource control apparatus may be based on the described resource apparatus. In other words, both the client and the agent may use corresponding steps in order to work together or to be inter-related products.

The NFC interaction may be characterised by a good responsiveness compared to other kind of communication medium, affected by latencies, and by a good level of security, due to the very short range. The limited range of reachability of NFC or the effective radius of NFC which in an example can be below 5 cm, substantially reduces the risk of unwanted data exchange or of interception. NFC can be used to complement additional communication technologies. The messages exchanged between the user and the resource control apparatus, besides the initial near field communication, may be transmitted in an encoded format over multiple independent communication channels. This encoding may permit exchanging of messages with the server in case the server is connected to only one of the client, and the agent. In case the server is connected to both the client and the agent resource control apparatus the messages may be exchanged via a redundant path, e.g. via the first communication connection of each of the client and the agent. This redundancy increases the resiliency of the method that will be tolerant with respect to a communication fault on one of the channels.

The message exchanged between the user, the users resource control apparatus or client and the agent may comprise non-editable user identity data, for example the IMEI of the smartphone, SIM data, and the determined position. Non-editable data may be stored in a non-volatile memory such as a ROM (Read Only Memory). Access to non-editable data may be not intended to be amended by user interaction. In addition to non-editable data further data are provided that can be edited by the user, e.g. personal PIN or password and data collected from additional sensors such as biometrical data. In other words, the identifiers that are exchanged between the client and the agent can comprise at least two types of identifiers. The different types of identifier are editable identifiers and non-editable identifiers. For editable identifiers an input interface is provided that allows changing the identifiers. For non-editable identifiers the resource control apparatus does not provide an interface to change the identifiers. Non-editable data are protected from user access. Non-editable identifiers may be protected from user access either by a system password or a hardware coding or a boot sequence that is not known outside the suppliers developing team and therefore not intended to be edited by a user.

The identifiers of the resource apparatus are named authentication factors. Therefore, the data related to the identification of the user or of the client and the data related to the identification of the resource or of the agent, are named authentication factors. The identifiers are individual characteristics of the relevant resource control apparatus and help to differentiate between different resource control apparatuses from one another.

A composition of user authentication factors and resource identification factors form a compound access key. A sub-group of a compound access key may be a client access key. In other words a compound access key comprises at least two identifiers generated by different sources. The compound access key can be a string containing all the data necessary to grant a user access to a specific resource. The compound access key can be transmitted in encoded format to the access server. An access server is a logical entity, which is capable of processing and decodeing the compound key in order to decide whether the identified user can access the identified resource. In one example the access server is used as the logical entity, which has the function to decide if the access to a resource is granted or not based on the information contained in the compound access key and on other information stored in a user and resource database. The resource control apparatus and/or the server may comprise a reading device and/or a writing device for reading or writing the compound key.

Since a combination of multiple elements is required for the authentication of the user, the term multi-factor authentication may be applied to describe an authentication method as described in this text.

The resource control apparatus, the server and/or the corresponding methods may allow itself or combined to a system to enable location-based access. Location-based access may be made possible by using the compound access key. Such a compound access key can comprise the position of the client and the agent. Since the agent is coupled to the resource that is controlled by the agent, the key in particular comprises the position of the resource. Both positions can be validated, because the positions are retrieved from at least two independent positioning systems that get into proximity at a defined time and/or within a defined radius. The proximity may be ensured by the short reach of the used communication technology for exchanging the data, e.g. in a radius from below 5 cm.

In one example the access key comprises at least two identifiers selected from the group of identifiers consisting of a mobile identifier, e.g. an IMEI, a personal identifier, e.g. a PIN, a position of the user requiring access or requesting access, e.g. the position of the client, the position of the resource, e.g. the position of the agent, a timestamp of an request, a biometrical factors of the user requesting access. The access key is a compound key comprising at least two identifiers. In another example, the access key may be composed by the entire set of the listed factors, or by a subset of them.

The server apparatus or access server can be implemented as a logical entity in charge of assigning or not, access grant to the client. In other words, the access server decides whether to grant access to a resource that is connected to the agent resource control apparatus or not and issues corresponding commands, e.g. an access grant command. One execution of the access server logical process is also called server instance. The access server can have one or more instances that can be executed in the client resource control apparatus which may run on a client device. The client device is for example a terminal that is controlled by the user who wants to access the resource or who requests the access to the resource. The server instance can for example run as an instance on in the resource control apparatus and/ or remotely on the cloud, e.g. on a server infrastructure such as a server farm.

The method for controlling a resource may comprise an access method or a method for accessing a resource. The access method may be implemented as a sub-process of the method for controlling a resource. The access method is capable of handling any of the possible instances of the access control server. The server, or "server process" is a logical entity implementing the criteria for granting access control to a resource. An "instance" of the server is one execution of the Server process. Several instances of the server may be in simultaneous execution. Thus, the server may be implemented as a distributed system having a plurality of instances that work together. The server administrates and monitors the conditions for granting access. As input the server receives the position information of the client and of a corresponding agent. A first relation is made between the client and agent by touchless interworking, showing that the client and the agent want to have a relationship with one another. However, just being close to the resource does not automatically mean that access can be granted. The touchless interworking or the approaching of the client and a desired agent, in particular the placing of a client close to a desired agent, may only trigger the provisioning of identifiers and according position information. The provided identifiers and position information are sent to the server or at least to one instance of the server in the form of a compound key in order to request access. The server analyses the compound key and verifies that access conditions for the specific client and agent are met. The server can verify the provided data as the server knows the position information from the client and the agent and that both have to be within a radius determined by the corresponding second communication connection. The server also knows whether the client and agent are allowed or permitted to have a relation, e.g. a fee for using the resource has been paid. The server may execute a billing function and may allow access to a resource only for a limited period of time. Depending on its analysis the server sends an access grant or access deny signal to at least the agent in order to release respectively not release the corresponding resource.

The access control method is in an example initiated by an access request message (Acc_Req) that is sent via the second communication connection or via the short range connection, e.g. via an NFC connection, from the client to the agent. The access request includes a message identifier, and the client authentication factors. The message identifier may be a sequence number that allows identifying and administrating the order of messages. The client authentication factors may be a combination of editable and non-editable parameters gathered from the client resource control apparatus. The access request message may be sent after the second communication connection has been set up and established between the client and the agent.

In a system using a client control apparatus and an agent control apparatus, in an example, the client sends the access request, i.e. the access request message, to the agent. Even if the description in this text is made with regard to a client resource control apparatus and an agent resource control apparatus, the apparatuses can be implemented as physical hardware, as an integrated circuit, as an FPGA (Field Programmable Gate Array), as an ASIC (application-specific integrated circuit), as an application, as a software or as a logical entity. Therefore, the resource agent can be regarded as a process executed on a resource control apparatus hardware. Or in other words, the agent can be regarded as a software part of the resource control apparatus hardware, wherein the resource control apparatus hardware provides an API (Application Programming Interface) that can be used by the agent software. The agent software may provide identification parameter or identifiers of the requested resource, and may send an acknowledge message or acknowledgement message to notify that the access request message has been received. This acknowledgement message may be named access request acknowledgement message or access request ack (Acc_Req_Ack). The corresponding client application or resource application may be downloaded from a network store.

In an example the message access request acknowledge or access request acknowledgement may comprise the encoded compound key, which is the string containing the composition of identity and positioning data of the client and the agent.

In other words, an agent provides in a request message on the second communication connection at least one identifier derived from its hardware to another resource control apparatus, e.g. an agent. The other resource control apparatus receives via the second communication connection the identifier, e.g. a user identifier (UID), provided by the client. The other resource control apparatus adds to the UID at least one identifier that is characteristic for the other resource control apparatus, e.g. a resource identifier (RID). Both identifiers, the UID and the RID, comprise at least information that is not editable, i.e. that is characteristic for the resource control apparatus, e.g. an IMEI. The characteristic identifier or the individual identifiers are unique in a resource control system. Therefore, all the individual characteristics differ from one another. At least one piece of the information comprised in the identifier may depend on the time, e.g. the time when a contact between the client and agent has been established. In addition to the individual characteristics or the non-editable characteristics the identifiers exchanged between the resource control apparatuses can comprise identifiers that are the same or at least similar to one another even when derived from a different source. Such a parameter may be location information that can be derived by every resource control apparatus independently and can be compared to one another. The location information may be time variant. In an example the exchanged identifier may be a set of individual characteristics and similar characteristics respectively of non-editable information and editable information. In another example the identifier comprises information that does not change over a predetermined time interval and information that changes over said time interval. E.g. an IMEI or an address may be independent from time whereas the position may be a function dependent on the time. Since every resource control apparatus generates such a set of characteristics by using a second communication connection the sets of characteristics can be exchanged and a compound identifier can be generated.

In other words, by an access request message the client resource control apparatus sends an identifier of the client resource apparatus, e.g. UID, to the agent resource apparatus. After receiving the UID the agent resource apparatus combines the received UID with an identifier of the agent resource apparatus, e.g. an RID. By this combination the agent resource control apparatus forms a compound identifier, comprising UID and RID and sends the compound identifier back to the requesting resource control apparatus, i.e. the client resource control apparatus. The agent resource control apparatus uses an access request acknowledge message to send the compound identifier or the compound key to the client.

After the access request acknowledge message is sent, the compound key is aligned on the two endpoints involved in the access method, i.e. on the client resource control apparatus and on the agent resource control apparatus. In other words, after the exchange of the compound identifier or the compound key via the second communication connection, each resource control apparatus has the compound key and can process it. At this phase of the process both apparatuses have generated the access factors. At least one of the apparatuses can use the factors in order to request access to the resource by a server.

The bidirectional second communication connection permits exchanging information related to the user and to the agent, in order to concur to compose the compound access key, and to the alignment in both end-points, by using the access request acknowledge or the access request acknowledgement.

The access server can be executed remotely in a cloud or on a server. Alternatively, or in addition, the access server can be executed locally on at least one of the resource control apparatuses.

Both the client and the agent forward an access request acknowledgement message comprising the compound key to the server using the first communication connection. The first connection may be a permanent or temporary connection between the server and the respective resource control apparatus. If the server is executed on one of the resource control apparatuses the connection can be an internal connection, e.g. via an internal bus on the resource control apparatus. In case that both resource control apparatuses set up a first communication connection to the server apparatus, the server apparatus receives the access request acknowledge message from two sources or via two legs. The access request acknowledgement message sent to the server comprises the compound access key. In case of connection error, or in case only one single first communication connection is established with the server apparatus, the server apparatus receives both compound keys via a single leg or via the single communication connection. In another example the server may only receive the compound key from one single source. The server uses the received at least two compound keys from the client and the agent as an input to a grant decision algorithm running on the server. A resource control system may comprise at least one server, one client resource control apparatus that requests access and one agent resource control apparatus that has physical access to the resource to be controlled. The server receives from each resource control apparatus the compound key to verify the both compound keys and to grant access to the resource based on the result of the verification.

In order to enable or control the resource, in an example the grant decision algorithm processes the compound access key and returns a Boolean value in the form of an access grant variable. The access grant variable represents the decision made by the decision algorithm. A Boolean data type is a data type that can substantially only take on or take in two possible values. The two possible values are the logical values True and False so that the access grant variable can assume the value True or False. If the value of the access grant variable is True than access is granted otherwise access is refused. In an example the access grant variable is sent to the agent resource control apparatus and the agent resource control apparatus grants access to the resource based on the value of the access grant variable.

The result is provided by matching and/or by comparing the data composing the access key, with programmable decision criteria and/or rules.

In one example the value of the access grant variable is determined by examining four decision criteria in the server. The server is adapted to make the decision after the authentication factors such as UID, RID etc. are extracted from the compound key. Thus, the decision criteria are extracted from the compound key. The compound key transmitted in an access request acknowledge message by the client resource control apparatus comprises the user ID of the client which is requesting the access, the resource ID of the agent to which or to whose resource the client wants to get access, the user position, i.e. the position of the client resource control apparatus in the time during that the second communication connection has been established and the agent position, i.e. the position of the agent resource control apparatus in the time during that the second communication connection has been established. If all four values have an expected value, the value of the access grant variable is set to the value True and a signal or command is sent to grant the access, to release the resource and/or to release or stop the access.

In particular the server checks as part of the granting access whether the UID, the RID, the user position and the agent position meet predefined access grant decision criteria. For this comparison the server uses internal variables that are dependent on the fact that a partial access criterion is met or not and which are set to the logical value True or False. From these partial comparisons the value for the access grant variable is derived. Only if all partial comparisons meet the expected results the access is granted by setting the access grant variable to the value True. By using Boolean values the comparisons may be made by logical gating operations such as AND- or OR-operations.

The User ID (UID) or Client ID (CID) fulfils the access grant decision criteria if the user's UID that is part of the compound access key is included in the database of registered UID, i.e. in the user data base. In case the UID is registered in the user database of the server, the UID meets the access grant requirement and a corresponding UID variable inside the server is set to True. Otherwise the UID variable is set to False.

The Resource ID (RID) fulfils the access grant decision criteria if the agent's RID that is part of the compound access key is included in the database of registered RID or not, i.e. in the resource data base. In case the RID is registered in the user database of the server, the RID meets the access grant requirement and a corresponding RID variable is set to True. Otherwise the RID variable is set to False.

The user position, i.e. the determined position of the client resource control apparatus, fulfils the access grant decision criteria, if the position that has been determined and exchanged during the second communication connection has been established, is found to be within a programmable radius from the position of the other resource control apparatus, i.e. the position of the required resource. The programmable radius may be determined dependent on the physical parameters of the second communication connection. E.g. in case a NFC connection is used as second connection the radius may be programmed as to be in the range of a few inches, of a few cm or less than 5 cm or less than 10 cm. The radius may be derived from a specification of a physical layer according to the OSI model (Open Systems Interconnection Model) of the used connection technology. In other words, the server may extract the determined position information of the resource control apparatus and the received position information of the other resource control apparatus from the compound access key and determines whether both position information lie in a range of about the maximum possible physical reach of the second communication connection. In case the user position is determined as having been within the programmable radius of the position of the agent, the user position meets the access grant requirement and a corresponding user position variable is set to True. Otherwise the user position variable is set to False.

As a fourth access grant decision criteria timestamp information may be extracted from the compound key. The timestamp is a time recorded at the time the position in each of the resource control apparatuses has been determined and/or the second communication connection has been established. The timestamp may also have been exchanged during the time period the second connection or the short range connection has been established between the client and the agent.

The timestamp indicates the point in time or a time interval when the position is determined. For granting access to a resource or for granting control of a resource to a client, the position of the client can be compared with a known position, that may be in one example the position of the resource or agent that is intended to be accessed or in general can be any programmable position. The access grant variable is set to TRUE or FALSE, depending on the fact that the distance of the clients position compared to the position of the agent or of the resource, which can be a position that has been programmed or that has been derived from the agent's position determining device, is less than a predefined radius. Since the position is calculated at a given time indicated by the timestamp, the server may also control that the difference between the "timestamp" and the "current" time is included in a certain time interval. In other words the system controls, by means of a comparison of the timestamp and a given time that can be the current time calculated in the server, that the position is up-to-date. Or in other words, as a plausibility check the server may verify that the time at which the position information has been determined lies in a predefined acceptable time range. If the position of the agent is a fixed position or a predefined position, instead of a time of determining the position the time of establishing the second communication connection is determined. By such a plausibility check it may be ensured that the positioning information has been determined in about the same time range. The timestamp check may not be necessary. However, such a timestamp check may increase the security and may protect the authorisation factors from manipulation. If the resource control apparatus is mounted on a fixed position the age of the last determination of the position may be older than in the case of movable resources. The acceptable maximum age of the position information may be stored in the server for every individual resource.

Consequently each single partial decision criterion may provide a Boolean value as a result. In the above example the UID variable, the RID variable, the user position variable and the timestamp variable will have a Boolean value. Only if all predefined access criteria are met, access to the resource is granted and a corresponding command may be issued. Which access criteria will be used can be set up in the server. In the above example four access criteria have been used. In an example the status of the variables can be linked by a logical AND-connection in order to get a value of the access grant variable. Only if all variables have the value True at the same time the access grant variable will have the value True and access to the resource can be granted.

The described grant access method is based on a compound logic gate applied on the combination of the Boolean value resulting from the decision criteria. The compound logic gate is given by basic logic function such as AND, OR and/or XOR or by a logic mask given by the combination of basic logic functions. The access grant decision algorithm may increase the security, reliability, resiliency, flexibility and responsiveness of a resource access method.

Security may be provided by using multi-factor authentication, with the end user identity data given by the composition of a non-editable user data such as for example the IMEI of the smartphone, SIM data, together with multiple user factors such as personal PIN editable by the user. In addition device generated factors such as position information and/or time information can be combined. Position information can be used as a flexible identifier for the corresponding resource control apparatus.

Furthermore, user editable information such as a PIN or a fingerprint may be used for generating the compound key in order to ensure that the client device, e.g. a smartphone is used by its owner. In other words, user editable information may comprise identification data for a user of the resource control apparatus, of the client and/or of the agent.

Position information may be retrieved by a position determining device of the resource control apparatus such as an internal GNSS sensor. It is in general not intended that the user is able to edit or override positioning information such as determined coordinates.

The multiple factors that are exchanged via a secure channel may comprise identifier and position information. By determining an identifier and position information of the same apparatus an association between the positioning information and the identifier such as UID or RID, can be made. Consequently the origin of the position information can be determined. An identifier is an authentication factor. Therefore, an association between position information and a corresponding factor can be made.

The second communication connection can be a secure channel. In an example the secure channel can be a connection based on Near Field Communication technology. Because of the short reach, range or scope of the NFC connection the risk of manipulating the data exchanged with such a connection may be low. The NFC connection may be established between the resource control apparatus and the other resource control apparatus, e.g. between the client and the agent. For the purpose of transmission the multiple factors may be encoded such that the encoded data form a string. This string that is exchanged via the short range connection or the NFC connection may be named or referred to as compound key. The compound key is exchanged between the logical entities involved in the access method or in the method for controlling a resource. The logical entities involved in the method for controlling a resource may comprise a client, which requests access to a resource, the agent, to which the resource is connected, e.g. by an actuator device, and a server responsible for deciding about the permission to access the resource. A resource may be accessed by using the actuator device.

The flexibility of the method for granting access may be provided by the flexible format of the compound key that can be composed by a programmable set of factors. The server can be programmed to grant access on the basis of the matching all predetermined factors or a subset of them. In other words the server may use a set of rules which have to be met before access to a resource can be granted.

In an example the process of requesting access may be triggered by an NFC interaction, such as bringing two resource control apparatuses in close physical proximity. By using an NFC interaction it may be ensured that a specific user is actually in physical contact or in physical proximity with the resource control apparatus, to which the user desires access. The interaction may be a contactless interaction, which allows contact of at least two resource control apparatuses by wireless interaction. By contactless interaction initiated by a user an access request may be triggered in order to request the exchanging of a compound key. The compound key can be encoded in order to increase the security or to bind the relevant data together. After distributing the compound key to the endpoints of the NFC connection, the compound key may be automatically transmitted via different channels, including short range and remote wireless communication, connecting the two end-points. An example of such a channel is the first connection which may be setup independently of the second connection.

The compound key can for the purpose of distribution multiplexed to multiple channels. By multiplexing or simultaneously transmitting the compound key via multiple independent channels, the robustness and resiliency of a resource control system may be increased. In other words, in case of single failure on one of the channels the compound key can still reach the server and the access method can still be executed. However, as a minimum requirement at least one single connection may exist in order to transmit the compound key to the server. In other words, it may be sufficient after receiving the compound key to transmit the compound key via the first communication channel of one single resource control apparatus. In another example it is possible to exchange just the factors and prepare the compound key in the client and agent independently from one another, instead of sending the client identifier to the agent and receiving the compound key. The objective of the exchange of positioning information and identifiers is that every instance ends up with a complete set of information, i.e. the end points are aligned.

In other words, in one example it may be possible that the agent is a resource control apparatus that has no first communication connection and/or no position determining device. The agent may be able to do without the first communication connection because it either only sends its own identifier and/or positioning information or uses the second communication connection or another communication connection between the client and the agent, e.g. a Bluetooth connection, in order to exchange data. Triggered by the setup of the second communication connection it provides its own identifier to the client who initiated the second communication connection.

Once the user, by means of the client application, starts the access request via the NFC contactless interaction, the access method can be completed using flexible communication channels. If the NFC connection is interrupted after the hand-shaking phase, then the entire access method can be completed via supplementary independent communication links. The "contactless interaction" defines the period when the two NFC endpoint come in contact, i.e. the two endpoints or control apparatuses are so close to one another that they come into physical reach of the connection and cause a reaction according to the implemented NFC protocol. The event of getting into the reachable area or into the range from another may trigger the setup of the second communication connection, e.g. the NFC connection. If the set up of a connection starts, a Hand-Shake phase is executed. The "Hand-Shaking" phase may describe the protocol used by two endpoints in order to exchange basic information, during the interaction.

In one example, after the NFC contactless interaction the Hand-Shake phase is started. The Hand-shaking phase may be used to exchange identifier, position information and/or the compound key. In addition to the second communication connection, e.g.in addition to the short range connection or the NFC connection, the resource control apparatus and the other resource control apparatus may establish an additional communication channel to complete the transmission of the encoded compound key and the completion of the access method. This other communication connection may be a communication connection of medium range to long range, i.e. a communication connection whose range lies above the range of NFC. The higher range for this additional communication connection may be possible since the range may not be used to verify the proximity or position information. This may be possible if the position information got time stamped triggered by the second communication connection. Such an additional channel may use Bluetooth or GPRS (General Packet Radio Service). In other words, the NFC connection may only be used for initiating a communication. The actual communication may be provided via another communication connection that may have a longer range.

In order to ensure that the position information can be compared to the range of the second communication connection, the position information is exchanged during the time interval when the second communication connection is set up or the position information determined during that time is time stamped with the time of the connection. The position information may be associated to said timestamp that can be compared to the time of the short range connection, e.g. the time when the NFC connection has been setup. Because of the rapid information exchange it may be possible to compare the information that arrives at the server and the "current" time of the server can be used as time to which the timestamp of the position information is compared.

A Bluetooth connection may have a range of 10 to 20 meters whereas an NFC cionnection has a range of less than 10 cm. In case the position is determined while Bluetooth connection is active and the Bluetooth connection was taken as the second communication connection, the tolerance area for the validation of the position information may have to be assumed as to be larger, e.g. 20 m, compared to the case NFC is used.

The responsiveness of the method for controlling a resource may depend on the time required to complete the alignment of the access key and the application of the decision algorithm. This time can be affected by latencies or interruption of the communication channel used for exchanging the data. The use of NFC, in combination with other communication channels where information is multiplexed can help to maximise the responsiveness because data NFC may implement an immediate interaction that doesn't require manual configurations and it may not be affected by latencies. After NFC interaction the other communication channels may be established automatically by the client and/or by the agent. This characteristic of NFC can determine the responsiveness of the system.

In one example, the near field communication triggers the access request, then, also in case the NFC interaction is interrupted, the alignment may be completed through the channel with minimal latency. A Near Field Communication channel may also allow transferring of energy and may allow for a good reliability of the access method. In particular, the resource control apparatus may not require any external source of energy to perform the NFC hand shaking. The energy needed for the hand shaking process may be provided by the radio wave of the NFC, e.g. provided by a user smartphone having an NFC communication unit installed. Therefore, a resource control apparatus using NFC as second connection may be able to work several hours in absence of a power source and may remain in standby mode for an undefined period. This fact may make the resource control apparatus robust.

Consequently by using the described characteristics, the resource control apparatus may permit granting access to a generic resource for a user, based on the user identity and the relative positions, with a secure, reliable, resilient, and flexible method.

The method that is used to operate the server may employ a cloud algorithm and can correlate or compare the end user identity and the end user position, with information about the position and the availability of a resource, such as a car, a charger, a bike or any other remotely controlled actuator. Based on the result of said correlation a decision may be made about permitting, releasing or denying the access to the resource. In particular, a communication connection may be established between the user apparatus and the resource apparatus that allows the user apparatus to control the resource apparatus.

In an example the resource control apparatus comprises a set of sensors wherein the sensors may be capable of detecting the authentication factors that compose the access key. The sensors can for instance comprise a position-determining device and a communication device. In a further example the position-determining device may be a satellite receiver, GNSS (Global Navigation Satellite System) or GPS (Global Positioning System), providing the coordinates of the resource which is associated to a resource identifier (RID). The communication device is adapted to setup a NFC connection and to setup additional complementary connections, connecting the two endpoints, whereas the two endpoints are the user resource control apparatus and the agent resource control apparatus.

The first communication connection is independent of the second communication connection. In an example, the first communication connection employs a different communication technology than the second communication connection.

In one example, the first communication connection is established directly between the two endpoints and the second communication channel is passing through a remote server capable to memorize the data exchanged in the communication and to forward the same data towards the two endpoints.

The communication device may further be adapted to send the data that may be used for composing the access key via both the first communication connection and second communication connection. In an example the sent data can comprise an RID, a UID, a position information and/or a timestamp. The use of the compound key is one exemplary embodiment of the method, that permits an easy encoding of UID and RID and positions, in a single message. Furthermore, the communication device is adapted to receive data for composing the access key such as RID/UID, position, timestamp, of another apparatus via both the first and the second communication connection.

In addition to this, the communication device is also adapted to send an identifier of the resource control apparatus via the second communication connection and the communication device is adapted to receive an identifier of the other apparatus via the second communication connection. Said identifier of the resource control apparatus is an individual characteristic of the resource control apparatus and said identifier of the other apparatus is an individual characteristic of the other apparatus.

The identifier can be used to distinguish the resource control apparatus from the other resource control apparatus. Said identifier can in particular help in identifying the source of information. By using such identifier, a function of a resource control apparatus can be distinguished. An identifier may be named as non-editable information.

For example a user resource control apparatus, a user apparatus, a client apparatus, or a master resource control apparatus, e.g. a mobile device, can be used to control a resource control apparatus, a remote apparatus or a slave resource control apparatus.

In an example the logical entity executed on the resource control apparatus is also called agent. In such a case, the client may be operated by a user and may not be connected to a resource whereas the agent may control a resource, and therefore the agent is directly connected to the resource.

The user resource control apparatus may use a user-id, a user identifier, a user identity or an UID. The agent resource control apparatus may use a resource-id, resource identifier, a resource identity or an RID. The UID and/or RID may be used to differentiate the role of a resource control apparatus. For instance the master has a UID or CID (Client Identifier) and the agent or slave has an RID. A UID or CID may also allow identifying a user whereas an RID may allow identifying a resource like an actuator. An actuator may convert electrical energy into mechanical energy.

According to another aspect of the present invention, a method for controlling a resource is described.

According to another aspect of the invention, a server apparatus is described. The server is a logical entity that has the function to execute the algorithm for the decision of access grant or foe granting access. The server communication device is capable of exchanging data with the two endpoints involved in the resource access request, i.e. the resource control apparatus and the remote resource control apparatus or the client and the agent. In one example the server or the Resource Access Server Logical apparatus is capable of exchanging in a bidirectional communication the access key composed by the user resource control apparatus and the access key composed by the resource control apparatus, with each of the two endpoints. The user database is also adapted to store user related information of a first control apparatus. In one example the user database is adapted to store the UID, a status variable, and the position of the UID associated with a timestamp which indicates the instant at which the position was detected.

The resource database is adapted to store resource related information of a second resource apparatus or of a second method, e.g. an RID, a status, a position of the RID or of the resource linked to the other resource control apparatus. The resource's position is also associated with a timestamp, which indicates the instant or the point in time at which the position was detected. The position may not change since the resource control apparatus is fixedly mounted on the same place. Then the position data can be stored in the resource control apparatus. In another example the position information may be gathered in regular time intervals and be determined before, during and/or after the second communication connection will be/is/has been established. In yet another example the determining of the position information is triggered by the second communication connection.

The server apparatus is able to apply the grant decision algorithm, processing the compound key, containing data of the user, or client, and data of the resource. In particular, the server decodes the compound key and may compare it with a programmable access decision mask. The decision mask can be a string containing access decision criteria, to be applied to each field of the compound key. The result of the comparison of the compound key with the decision mask may be a Boolean value, True or False. The result of True or False means that that specifically identified client can access or not the specific requested resource. The specific client and resource may be identified by the UID and the RID, respectively. The result of the comparison may have impact to the access grant variable.

The server communication device is adapted to send the result of the grant decision algorithm via the user communication connection and/or via the resource communication connection.

According to another aspect of the invention, a program element is provided, comprising program code, that is adapted, when executed on a processor, to execute at least one of the methods of the invention.

The correlation or relation between the user resource control apparatus' position, e.g. the smartphone's position and the position of the remote resource control apparatus or the resource controller, retrieved from independent positioning systems, may provide a NFC verified positioning. The correlation may also allow for an access method to location-based services based on positioning criteria combined with user identity criteria.

The identity and positioning data included in the compound key are shared among all the logical end-points involved in the access method. The end-points may be a user resource control apparatus, a remote resource control apparatus and a central server. The user resource control apparatus may be named client resource controller, the remote resource control apparatus may be named agent resource controller. The general structure of the user resource control apparatus and the agent resource control apparatus may be similar.

The client resource control apparatus may be adapted to access and control the agent resource control apparatus. The resource control apparatus may also comprise a control device that can be used to physically control the resource. The client resource control apparatus may be adapted to access or control the resource and/or to provide a visual feedback about the state of the resource.

After generating the compound key the authentication information or the control information, i.e. the information contained in the compound key, may be exchanged via a separate communication connection independently from the first communication connection and/or from the second communication connection, to avoid the need to remain or stay in the range of Near Field communication. The change of communication connection can be performed automatically. The user resource control apparatus can check the availability of a separate communication connection and transmit the same control information through the second channel.

In one example, the end-points used in a resource control system are an end user applet, the local agent, e.g. a logical endpoint running on the hardware device of the remote resource controller, and a cloud database. The server may decode the compound key and applies the grant decision algorithm. When this step is completed the server may inform the local agent, i.e. the logical entity controlling the physical resource, about the value of the access grant variable as a result of the access grant decision algorithm. The information provided by the server as outcome of the access grant decision algorithm may be the value true or false. The value may be the result of a comparison of a specific user (UID) and the specific resource (RID), identified by the compound key. The value may be calculated by applying a decision rule to the parts of the compound key The server may be a logical entity that can be remote from the endpoints and reside on the cloud, or can reside on one or both of the endpoints. In case multiple server instances are simultaneously executed a mechanism for electing the main server will be apply. This mechanism may select a main server instance in order to avoid applying the algorithm to grant access to a plurality of server instances and thus introducing ambiguous result. In more detail, the process of election of the server may depend on different priorities allocated to the different server instances. In one example, higher priority can be assigned to the server instance residing on the cloud, medium priority to the server instances residing on the client apparatus, and low priority to the server instance residing in the resource control apparatus. In case a plurality of server instances exists simultaneously, the server with highest priority may be elected main server. This mechanism may ensure that the output of the algorithm of decision is unique and unambiguous.

The resource control apparatus comprises an energy management device for managing the energy consumption. The energy management device may switch the resource control apparatus between at least two states. In a passive state, passive mode, sleep state and/or standby mode the remote resource control apparatus may be disconnected from substantially any wired power supply, in particular from an internal power supply. In the standby mode the remote resource control apparatus however may be adapted to receive control commands and/or control information that can control the remote resource control apparatus in order to be prepared for a powered mode, i.e. a mode in which the remote resource control apparatus is connected to a power source. The power for supplying the energy necessary for controlling the remote resource control apparatus in the standby mode may be derived from a wireless communication connection. The power may be sufficient for operating communication with the user resource control apparatus and/or with the central server. The power may also be sufficient to switch on and off the satellite receiver, the position determining device and/or the second communication channel, e.g. by controlling a switch that connects the satellite receiver and/or the second communication channel to a power supply, e.g. to a battery. In other words, a control device provided in the resource control device may be dimensioned such that power received from the user resource control apparatus via a communication connection, e.g. via a NFC connection may be sufficient to program and/or to prepare the remote resource control apparatus for the active state. In an active state, active mode or operating mode the remote resource control apparatus may be connected to a power supply, e.g. to an internal power supply such as a solar cell, a power line, a generator or a dynamo. In the active state the remote resource control apparatus may execute the commands, the preparation, the instructions, commends or the program received from the user resource control apparatus during the standby state.

A switching system controlled by a timer or by a sensor may be provided that may allow switching the remote resource control apparatus back to the standby mode if desired, i.e. if the value of the remaining battery charge detected by the sensor is lower than a programmable threshold and/or if a predetermined time has expired. In the standby mode, the remote resource control apparatus separates the consumer from the power supply in order to save energy. The contactless interaction via radio waves used for example for Near Field Communication may be sufficient to power up the resource control apparatus, based on an ultra-low-power microcontroller, and to wake it up from the stand-by mode.

In this wake-up status the logical entity of an agent resource controller or of an agent resource control apparatus can be executed in the resource apparatus and may contribute to the composition of the compound key and to the evolution of the access method. In other words, the agent can receive the user credential present on the smartphone, e.g. the identity data, UID and the positioning data of the user and the PIN, and compose and exchange the compound key, without the need of any further power supply. In other words, the resource control apparatus may be adapted for receiving power from an NFC connection and using the power for exchanging factor data such as an identity, position data and/or timestamp data and for generating and exchanging a compound key. Therefore, the access request message and the access request acknowledgement message may be substantially only generated by using energy provided via the second communication connection.

Once the access request credentials have been verified, for example by the cloud algorithm, by the server and/or by the resource control device, the resource control apparatus may activate a further power supply system, for instance an internal power supply system such as an internal battery. The exchange of data may also be powered by an NFC communication, for example if the server is running in one of the NFC endpoint, i.e. in the client or in the agent. If the server is running remotely from the client or the server in the cloud, the NFC may not be sufficient to power the transmission module to connect to the cloud.

In an example at least one of the two endpoints involved in the NFC connection comprise a source of energy or a power source in order to provide the energy to the other apparatus. In a further example the client may be running on a smartphone that is powered by the embedded battery and the power is transferred from the client to the agent resource apparatus

In one example the client resource control apparatus and/or the agent resource control apparatus may have the same design with regard to the power supply, e.g. a battery. Therefore, the client and the agent may use the same voltage, In another example the design of the power supply of the agent and client can be different. In a particular example the agent resource control apparatus may have a battery with a higher capacity than a client and the agent resource control apparatus may have additional energy harvester, such as photovoltaic panel, to extend the duration of the functionality without connection to the power supply grid.

If the power provided is not strong enough to power the position determining device or if the position determining device is switched off whilst the compound key is generated the resource control apparatus may use position information stored on the resource control apparatus in order to provide the position information. In one example if the position determining device, e.g. the GNSS, is switched off, the agent may add the most recent position that is stored in the agents' memory to the compound key. If for example the resource which is controlled by the agent is a mobile vehicle, the most recent position stored in the memory could be the position that may be determined when the vehicle has been stopped or parked. In general this parking position may correspond to the position at the moment a client will request the access to the vehicle. If the resource may be a fixed infrastructure mounted at a fixed location, the latest or most recently stored position corresponds to the current one. In other words if it is known for a resource that it is fixedly mounted at a place the position may be determined at the time when the resource is mounted and substantially always this stored position information will be provided when requested.

At the moment of connecting the client with the agent a minimum number of items of information may be exchanged. In one example the minimum information exchanged between client and agent is the resource identifier (RID) and the corresponding position information. In another example the minimum information that is exchanged is an identifier of the client e.g. the UID, an identifier of the agent, e.g. the RID and the position of the user or client and the position of the resource. In another example the information that is exchanged in addition comprises the relative timestamp. In the event some parameters are missing, the server may implement an error-handling algorithm, controlling the position of the client or of the resource previously updated in the database.

After the NFC \contact between the client and the agent the power supply may be configured such as to provide enough power to activate further active components, like for example a GPS receiver, a GNSS receiver, GPRS transmission module, a short range transmission module, e.g. Bluetooth, or lock and/or unlock system.

According to another aspect of the invention at least one of the first connection and the second connection is a near field connection (NFC) and can be used to transfer energy, can be used to switch a power supply, can be used to switch a consumer and/or can be used to trigger a physical action.

A near field communication can be used for touchless interaction, for transmitting information and/or for transferring energy. The transfer of energy may allow powering a passive apparatus, an agent or an apparatus in a sleeping mode, at least for a short moment in order to be able to receive information over the communication link even if the receiver is in a standby or passive mode. In other words a communication connection using near field communication may allow the sending of information together with the power that is necessary to receive this information and/or storing or handling the received information. This received power may be used to change the state of a register or a memory device on the receiver in order to reflect the transmitted information and/or to reflect the transmitted program. This state of a register can be used as physical switching operation if enough power for physical switching is available. Therefore, also access to a resource can be granted in a standby mode.

The agent and/or the resource which is in the sleeping mode or in standby mode, can exchange its latest position stored in the memory of the ultra-low-power microcontroller, powered only by the power provided by NFC connection without any additional power source. In an example the most recently stored position of a mobile resource may correspond to the position retrieved when the resource is parked or put into the sleep mode. In other words, the position may be retrieved just before the GNSS and the other communication module a set to the sleep mode or set to the standby mode, which is a passive mode requiring substantially no power source. The latest position or the most recent position available via NFC from this mode is relevant for providing access. After the access is granted, the GNSS and the transmission module can be activated, to permit real time update of the position, until the resource is stopped or parked again at a new position. In other words the GNSS and the transmitting module may be activated only during the period of time whilst the resource is moving and can remain inactive when the resource is steady or in a parked state. For reactivating the resource control apparatus the energy or power provided via the NFC connection may be sufficient. Therefore, the resource control apparatus may be dimensioned such that all active components such as the communication device and/or the position determining device can be operated by the amount of energy provided via air.

A near field communication connection may have a reach of only a few centimetres. Consequently, detecting an interaction on a communication channel based on near field communication technologies may allow locating the user as to be close to the receiver at the moment of the communication. The fact that two apparatuses are in proximity to each other enables or triggers a method for the validation of the position. The position of the point where the NFC interaction is performed is detected by a parallel detection of the position of the user resource control apparatus and the agent resource control apparatus. By comparing the position information received via the at least two independent position determining devices or the at least two independent satellite receivers at the moment of the communication, a validated position or a qualified position is obtained. The position information of the resource can be provided by the satellite receiver of the remote resource control apparatus or of the agent resource control apparatus. Alternatively, the position information of the resource can be a known position or a predetermined position, e.g. in case of a fixed resource. In such a case of a predetermined position the coordinates of the resource may be pre-registered in the database. The short range communication connection may ensure that the position information delivered by the independent source have been generated within a predefined radius from one another. In an example at least one resource control apparatus generates the position information at a time close to the time of exchanging data via the short range connection. The fact that data can be exchanged via the short range connection indicates that the resource control apparatuses that use this connection are in close proximity defined by the reach or range of the short range connection.

The comparison of the independently determined positions, e.g. the client position and the resource position, provides the ability of the validation of the user position. In this way it may be confirmed that a client is close to the location of an agent to which the client wants to set up a relationship with or to which the client desires access be granted with. The validation is obtained by verifying whether the position of the user, calculated by the satellite receiver in a smartphone, differs, at the moment when the NFC communication with a resource control apparatus has been executed, from the position of the resource in less than a programmable tolerance radius, e.g. of less than a range of 5cm to 10 cm, less than 10cm to 20 cm or less than 1 meter to 20 meters. If this condition is met the position of the user provided by the user resource control apparatus may be assumed as to be reliable within a so-called protection level, given by the tolerance radius.

The user validated positioning may allow to provide a "Location Based Access" to a resources and more in general Location Based Access Service with high level of reliability, respect to a case in which the client position is not validated and it is retrieved only by the client device, and potentially affected by not quantifiable error.

In the following an example is provided for how validation may be executed. After the position of the user resource control apparatus or of the client is validated, the user is enabled to access or has the Book for Access. The "Book for Access" or "Booking for Access" may be defined as a particular case of Access Request that can be fulfilled at a different time. Booking for access may be a reservation for an access. For example, a server may realize for some reasons that it cannot grant access to a requested resource, e.g. a resource having an identifier RID1. However, the server may realize that it would be able to grant access to another resource, e.g. a resource having an identifier RID2. RID2 can for example be located nearby RID1. In such a case the server may grant access to the other resource RID2 which access grant condition can be valid for a specific interval. For example, the user can be enabled or authorized to book vehicles in pools in a vehicle sharing scheme, or to book a timeslot for recharge an object at predefined recharging stations within a certain range.

According to another aspect of the invention the communication device and/or the position determining device is adapted to switch from a standby mode to an operation mode when position information and/or the identifier of the other apparatus is/are received via the second communication connection wherein the operation mode provides a higher power supply to the resource control apparatus than the standby mode

When the device switches to "power mode" or to "operation" mode the device activates the further communication channels in addition to NFC, and the satellite receiver fixing process, which may be used to determining position information. A passive resource control apparatus in a sleeping mode may be disconnected from substantially any power supply or may not be supplied by power. For example it may still be connected to a generator or dynamo but because it is not moving there is no power supplied.

The communication device, e.g. a radio transmitter or receiver and/or the position-determining device, e.g. a satellite receiver such as a GPS or GNSS receiver, may have high power consumption. Therefore, it may help insaving energy or power if these devices of high power consumption are switched off during a standby mode, e.g. when energy is transferred via a communication connection.

According to another aspect of the invention, the communication device is further adapted to receive a signal with a relation between the identifier of the resource control apparatus and the identifier of the other apparatus via the first communication connection.

Such a signal showing a relation may be a signal indicating that for a user operating the user resource control apparatus access is granted to a resource connected to a remote resource control apparatus. In other words such a signal may trigger an access pairing of a user and a resource. Such a signal can be an access grant signal.

According to an aspect of the invention, the resource control apparatus further comprises an actuator device or a control device, wherein the actuator device is adapted to generate a physical force. The actuator device can be controlled by a signal received via the first communication connection and/or via the second communication connection.

An actuator device may have a high power consumption compared to the power transmitted via a communication connection, e.g. via an NFC connection. However, in an active mode or in an operation mode, there is enough power available to operate an actuator by an internal or external power supply. An actuator may be a switch, a relay, a switch, a lock and/or a valve.

According to another aspect of the invention the resource control apparatus, in particular the remote resource control apparatus, is at least one of a charging station, a lock, a mobile device, a mobile phone, a smart phone, a credit card, a tag, an active apparatus, a passive apparatus and/or an application.

An application or applet may be executed on a user smartphone. This application is also called client applet.

According to another aspect of the invention the user communication connection and the resource communication connection use the same physical link.

By sharing a link or a connection, it is possible to provide redundant system and a failure of one of the two links can be tolerated.

### Brief Description of the Drawings

Fig. 1 shows a block diagram of a resource control system according to an exemplary embodiment of the present invention.
Fig. 2 shows a server apparatus according to an exemplary embodiment of the present invention.
Fig. 3a shows a flowchart of an access method for a method for accessing a resource according to an exemplary embodiment of the present invention.
Fig. 3b shows a flowchart of a release method for a method for releasing a resource according to an exemplary embodiment of the present invention.

### Detailed Description

The illustration in the drawings is schematic and may not be to scale. In different drawings, similar or identical elements are provided with the same reference numerals.

The following description mainly describes an example of a NFC connection between two resource control apparatuses. However, it is not intended to limit the scope of this text to such an embodiment. Any communication connection which has a limited range in order to define a tolerance area and/or which allows transmitting power through air can be used between the apparatuses.

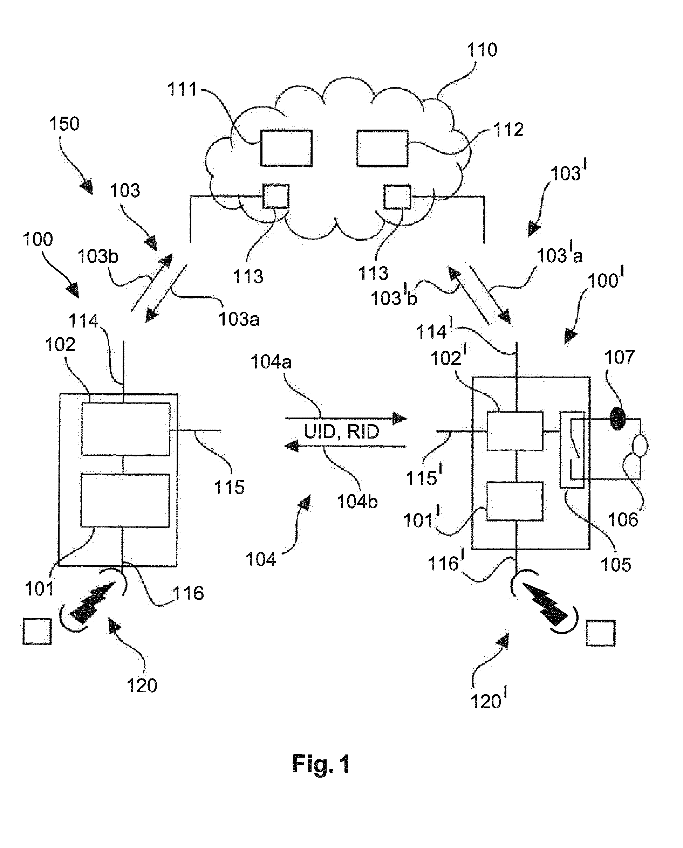

Fig. 1 shows a block diagram of a resource control system according to an exemplary embodiment of the present invention. The resource control system 150 allows granting access to a resource 107 or a consumer 107 which may be operated by electrical power from a power source 106 or from a power supply 106. The power supply 106 may be an external power supply that is active in an operation mode and may be inactive in a standby mode, The resource 107 is connected to a control device 105 or actuator 105 of the remote resource control apparatus 100'. The remote resource control apparatus 100' or agent resource control apparatus 100' is connected via a NFC interface 115' to the NFC interface 115 of a client resource control apparatus 100. The client resource control apparatus can be implemented as a client applet 100 running on a smartphone hardware. Via the NFC interfaces 115, 115' a NFC connection 104 can be set up if the client resource control apparatus 100 and the remote resource control apparatus are in proximity. The near field connection 104 is established as soon as the client resource control apparatus 100 is in a predefined distance of the remote resource control apparatus 100'. In case of NFC the predefined distance is in a few centimetres range, e.g. in a range of less than 5 cm, less than 10cm or less than 20cm.

Fig. 1 shows a minimum set up of a resource control system 150 having one single client, one single agent 100' and one single server 110. However, server 110 may allow operating a plurality of resource control apparatuses 100, 100' at the same time. The role of the respective resource control apparatus 100, 100', i.e. whether the resource control apparatus 100, 100' act as a client or as an agent may be configured in the corresponding resource control apparatus 100, 100' and/or in the server 110. In order to define the role it may also be possible to use a resource control apparatus in a minimum configuration that uses the second communication link 104 for communicating with the client and with the server 110.

The client resource control apparatus 100 or client 100 and the agent resource control apparatus 100' or agent 100' may be resource control apparatuses which are operated in a client mode and agent mode respectively. Either they automatically detect which role they have or they have been switched by using a corresponding switching device into a corresponding mode. Thus the resource control apparatus 100, 100' may be equipped with a mode switch which allows switching between the client and the agent mode. The principle structure of the client and the server is the same. The fact whether the resource control apparatus is operated as a client or as an agent may also depend on the fact which apparatus sends out a request and therefore acts as a master. For example receiving an access request message may switch an apparatus to a client mode. Both apparatuses may be adapted to send out requests and to react to requests via the second communication channel 104, via the short range connection 104 or via the NFC channel 104.

After the NFC connection 104, 104a, 104b has been established or set up, the agent resource control apparatus 100' can emit a sound and the client applet 100 can provide a visual, a haptical and/or an acoustic signal to the user in order to inform a user that the devices are close enough together and the NFC interaction is going on. For providing such visual, haptical and/or acoustical indications the client 100 and the agent 100 may have human machine interfaces such as a loudspeaker or a display, which are not shown in Fig. 1. As long as the sound does not appear, the NFC connection is not established. A reason for not having established a connection could for example be that the two apparatuses are not close enough for establishing the second communication connection 104.

Near field communication (NFC) is a set of standards for mobile devices 100, smartphones 100 or similar devices 100' to establish a radio communication 104 with one another by touching them together or bringing them into proximity without direct touch so that they can interact. The radius within which the peers of a NFC connection interact can be less than a few inches or centimetre. For example the NFC connection automatically will be set up if the distance between a client 100 and agent 100' is in the range from 0 cm to 5 cm, in the range from 0 cm to 10cm or in the range of less than 8 cm.

NFC standards cover communications protocols and data exchange formats, and are based on radio-frequency identification (RFID) standards. In the resource control system 150 of Fig. 1 the proximity interaction is established between an end-user smartphone 100 and a remote hardware apparatus 100' having a communication device 102'. The remote resource control apparatus 100' is used as NFC secure key controller 100' or agent. In other words, the agent 100' is a resource control apparatus which is switched into the agent mode. The communication device 102' comprises two interfaces 115' and 114'. By combining the two interfaces 115', 114' the communication device 102' supports a near field communication 104 and wireless connection 103' to a remote cloud database 110, 111, 112.

The NFC secure key controller 100' interacts with any smartphone 100 supporting NFC technology and running a corresponding application to interact with the cloud 110 and the controller 100'. In other words, the client resource control apparatus 100 is a resource control apparatus which is switched into client mode. In an example the client 100 is realized as an application running on smartphone hardware and executing the method for controlling a resource. In another example a cellular phone 100 or smartphone 100 can be equipped with GNSS technology and/or GPS technology in form of a satellite receiver 101, 101' or a position-determining device 101, 101'. Such a position-determining device 101, 101' in combination with the NFC connection 104 offers the ability to share positioning data or geographical information via NFC communication interface 115, 115'. The positioning data or geographical information can be integrated or displayed on maps. However, the position information alone retrieved and shared from a single simple smartphone 100 or another apparatus 100' using a corresponding position-determining device 101, 101' may not be considered as reliable parameter to enable access to location-based services and access to shared resource. In other words, as the accuracy of a position determining device 101, 101' alone may not be found good enough for securely determining the position of an apparatus additional information gathered from another apparatus may be used to verify the information gathered by a single device. Thus, if the position information shall be used as an authentication factor based on which access to a resource 107 shall be granted, the position information is gathered from at least two independent position determining devices or from at least two independent sources. The outputs of the at least two sources of positioning data may be used to verify one with the other. A communication connection with limited reach or range may be used in order to determine the point in time when both apparatuses are in close proximity.

In order to enable location-based access with a further level of reliability compared to a single position determination device the resource control apparatus 100, 100' associates the positioning data of the position determining device 101, 101' to a user identity UID or a resource identity RID. Such an identity or identifier may allow tracking the origin or source of the positioning data. In combination with near field communication, whose radius of reach or whose range is known, the determined positioning data can be verified to the range of the near field communication. Said UID and/or RID may indicate individual characteristics of a resource control apparatus 100, 100'. The term UID and RID may be used to differentiate identifiers from a client UID and identifiers of an agent RID. However, the structure of both identifiers UID and RID are the same.

By associating the position information or position data with a user identity the origin of the positioning data can be recorded. Thus, by associating the positioning data to a user identity, to a user identifier or to a user ID the data can be associated with a user resource control apparatus 100 and/or with a remote resource control apparatus 100'.

The identifier UID, RID may be an individual characteristic of a resource control apparatus that allows differentiating different resource control apparatuses. An identifier may be non-editable information. In other words an identifier may not change during a time interval. An identifier may be stored in a ROM and may be protected from editing by a user. An identifier can be seen as an address, for example an IMEI, that allows differentiating different apparatuses or different entities. In contrast to an identifier, position information is a characteristic of the resource control apparatus that may change over a time interval, at least that may change in correlation to a movement of the associated apparatus. For example the position information changes over the time when the resource control apparatus is approached or placed to another apparatus and therefore position information can be seen as variable characteristic of a resource control apparatus.

It may be seen as an aspect of the invention to combine fixed characteristics or non editable characteristics with variable characteristics in order to generate a compound key that can be used as authentication key. The compound key may comprise at least one variable parameter such as a position information that is correlated with a movement of an apparatus. By combining variable information with an identifier a fingerprint for a certain apparatus may be generated for a certain position. Combining the fingerprints of different apparatuses via a connection with a known range creates a compound key or authentication key that allows another apparatus or entity to verify the proximity of the apparatuses at a certain moment of time. Such an authentication key comprises information such as the position from at least two apparatuses that want to build up a relation with another and this information can be used for a plausibility check.

The positioning data received in the positioning determining device 101, 101' in the example of Fig. 1 is forwarded to the communication device 102, 102'. After associating the received positioning data or the position information with the corresponding ID, e.g. in the user apparatus 100 with the user ID or with the UID, and in the remote apparatus 100' with the resource ID or RID, the communication device 102, 102' sends the positioning information out to two destinations. In one example the identifiers UID, RID of both apparatuses and corresponding position information are exchanged. In another example only position information of one of the at least two apparatuses 100, 100' is transferred with corresponding position information. In yet another example the identifiers UID, RID are exchanged before the position information is exchanged. If the agent 100' is implemented as passive apparatus with minimum configuration only the passive apparatus 100' sends out its identifier RID together with its position information.

In the example shown in Fig. 1, the communication device 102, 102' sends 104a the positioning information together with the corresponding ID via a NFC connection 104 to another resource control apparatus 100, 100'. During the time the NFC connection 104 is established the communication device 102, 102' also receives 104b the positioning information determined by the other resource control apparatus 100, 100' from the other resource control apparatus 100, 100'. The NFC connection 104 is only established during the period when both resource control apparatuses 100, 100' are in close proximity to one another. The position information is collected during this period or read from a memory where it had been stored before. The NFC connection can be used to certify that the user and the resource 107 associated with corresponding apparatuses 100 respectively 100' are located within a short range and the validation comparison should be successful, if the two independent positioning systems 101, 101' provide coherent results.

The information exchanged during the time the short range communication connection 104 has been established can be sent to a validation entity such as a server 110 for verifying the plausibility of the data and/or for validation of the data. For validation purposes the server can compare the data and make plausibility checks. If the validation comparison in the server executed with the positioning data collected during NFC is not successful the server will prevent releasing the resource 107 or prevent granting access by preventing actuation of actuator device 105. The validation of the data or information in the server 110 may not be successful if for example one of the two positioning information is unreliable. In the case that information is found that is not reliable, access to the resource 107 via agent resource control apparatus 100' cannot be granted based on the Location Based Services. In this case of negative validation the agent 100' prevents actuating the actuator device 105 or blocks actuator device 105.

After the control apparatus 100 has received the information from the other resource control apparatus 100' or in parallel to sending out its own positioning information, the resource control apparatus 100 sends the positioning information to the central server 110 via a first connection 103, 103' or a cloud connection 103, 103'. In order to exchange position information and identifiers it is possible to combine the information to a compound key. A compound key may have a predefined format that can be read or written by any entity 100, 100', 110 of the resource control system 150. In particular the compound key is a specific encoding format of the UID and/or the RID and the corresponding position information.

In the example of symmetrical authentication between client 100 and agent 100' the client 100 which may be associated to a user who wants accessing a resource 107 prepares and sends an access request message including the UID and additional info to the agent 100' as soon as the low range connection 104 is established. In response to the request and during the time the connection 104 is established the agent 100' sends back an access request acknowledgement message, including RID and additional info regarding the status of the resource. In an alternative example both the client 100 and the agent 100' send the information independently from one another. In parallel and during the time when the low range connection is established the position information can in an example be sent out to the server 110 via a first communication connection 103, 103'.

After receiving the identifier from the other resource control apparatus 100' the information for preparing a compound key is available in the client resource control apparatus100 and in the agent resource control apparatus 100'. In other words the apparatuses are aligned. Both apparatuses 100, 100' that want to set up a relation, e.g. for releasing a resource or accessing a resource, prepare the compound access key independently from one another. The compound access key is prepared by combining the position information of the client, the position information of the agent, the identifier of the client UID and the identifier of the agent RID into a string. The order in which the information appears in the compound key can be predefined. The different entities may have a device for reading and writing the compound key, respectively. In addition in the compound key a timestamp information can be added to indicate at which point of time the position information of the client and the position information of the agent have been determined. The compound key is available in the two endpoints 100, 100' of the NFC connection 104 and it comprises all the exchanged data and authentication factors of the client and the requested resource. As a further option the compound key can be encoded by using an encoding method selected from the encoding methods consisting of ZIP encoding, Huffmann encoding and run length encoding.

The information sent out via the first communication connection 103, 103' is used to send the messages to the server 110, and update a database 111, 112 in the central server 110. In one example in order to send the messages to the server, a single first communication connection 103 can be used by both the client and the agent.

Information received from a user resource control device 100 or client 100 is recorded and/or updated in a user database 111. Information received from a remote resource device 100' or agent 100' is recorded and/or updated in a resource database 112. Each user apparatus 100 is associated with a line or a data set of the user database 111. Each resource apparatus 100' is associated with a line or with a data set of the resource database 112. It is also possible that the user resource control device sends out its own positioning information associated with its own UID and the positioning information received from the remote resource control apparatus 100' associated with the RID of the remote resource control apparatus via cloud connection 103. The data base 111, 112 with which the resource control apparatus is associated may depend on the role of the resource control apparatus. A resource control apparatus that is switched to the client mode, i.e. a client 100, may be associated to the user database 111 or client data base 111. A resource control apparatus that is switched to the agent mode, i.e. an agent 100', may be associated with the resource database 112. An agent resource control apparatus 100' can be a representative for a resource 107 that is to be controlled. In other words the agent resource control apparatus 100' and the resource 107 can be regarded as a resource entity that is to be controlled.

By associating the position information to an identifier such as a UID or a CID and to a RID and by exchanging the identifiers and the positioning information via a NFC connection the position information retrieved by one resource control apparatus 100 can be validated with the position information retrieved by another resource control apparatus 100'. The exchange of information is triggered or initiated by executing an NFC interaction, such as setting up an NFC connection by approaching the apparatuses 100, 100' to another. From a distance in the range of a few centimetres, the NFC connection 104 will automatically be set up and trigger the exchange of information and/or trigger the update of corresponding data base entries.

In one example the user resource control apparatus 100, 100' determines its position information with a first position-determining device 101 after the NFC connection has been set up and established. The position determining device 101 of the client is independent from the position-determining device 101' of the remote resource control apparatus. However, since the information can only be exchanged when both apparatuses 100, 101' are in close proximity, at least two measurements for almost the same position at substantially the same time exist. Therefore, the accuracy of the measurement of the position can be increased, even if every single position determination is not very accurate.

The resource control system 150 can provide a smart access function. The access to a resource 107 is processed and granted in an automatic mode, triggered by touchless interaction. Touchless interaction may describe a method for communicating where the communication is triggered as soon as two apparatuses come in a predefined close proximity even if the apparatuses do not directly have contact with one another. Touchless interaction does not exclude the situation that both apparatuses are in direct contact with one another.

Furthermore the system 150 ensures secure access to a resource 107 if the user identification UID or CID supports multi-factor authentication. In an example the user identifier is associated to the smartphone SIM (subscriber identity module) card. In order to identify the user operating the client 100 as an authorized user a PIN (personal identification number), password or fingerprint or other factors can be requested by an applet running on the client 100, e.g. a smartphone, before proceeding with the access granting method. The PIN, password or the fingerprint provides a further level of protection in case the smartphone is lost and could be used by an unknown user. The PIN also permits a user to run the client program on a different client control resource apparatus, or on a different smartphone, as long as the client applet is loaded and the user is authenticated by the authentication factors. Consequently the PIN makes the user independent from the used hardware.

Another example of use for the system 150 could be a shared access key function. A key for accessing a resource can be static or dynamic. In case of a static key a resource always requests the same password. The dynamic handling of the PIN could be necessary to access a pool of resources shared among a community of users. In this case, the method assigns a key to each accessible resource and the keys are dynamically changed after a programmable time or event. In this way, the algorithm can provide access credential to a set or group of users of the community, depending on the credentials of the user related the specific resource. The credentials are valid for a programmable period.

The characteristics or features provided by a service that uses the NFC secure key system 150 or the resource control system 150 are reliability, responsiveness, resiliency and robustness. The reliability of the association between user and resource, i.e. between user resource control apparatus 100 and remote resource control apparatus 100' or between client 100 and agent 100' is reached by the double Near Field Communication interaction 104a, 104b, for example by the bi-directional connection 104. The double NFC interaction comprises one interaction 104a for an access request and one interaction 104b for an access grant confirmation, i.e. pairing or hand-shaking. The access request ack (acknowledgement) is exchanged in the same interaction of access request and may directly acknowledge the reception of a request message via the same communication channel. The access grant request message, the access grant confirmation message and the access grant request acknowledge message are messages that are exchanged in order to inform the different entities involved in the access grant procedure or in the method for controlling a resource about the status of the access grant procedure. The access grant messages might be exchanged via a second NFC interaction, or via another communication channel. During the pairing stage the key, i.e. the compound key, is generated and shared between the user, e.g. the NFC applet on a user resource control apparatus 100, and the resource, e.g. the NFC applet or an NFC controller on a remote resource control apparatus 100'.

The responsiveness of the system 150 is given by immediate response to the touchless interaction. The response may be displayed on the client application and may provide information about the status of the request to access a resource. In an example the actual status may be shown on a display and indicate the actual stage of the request process e.g. the states "acknowledge", "in process" or "granted". This displaying of information may comprise showing the status of the NFC connection and access grant information provided by the server 110.

The resiliency of the system 150 can be increased by using for every resource control apparatus an own communication connection 103, 103' to the central server 110 and mirroring the information received via the NFC connection 104, 104a, 104b on this communication connection 103, 103'. If both communication channels 103 and 103' are present, the system has a redundant channel that makes the system tolerant to the case of single fault on one channel. If the connectivity of one of the two channels 103, 103' or of one of the communication connections 103, 103' is lost, the grant decision algorithm can still grant access to the resource. In such a case of error, the first connection 104 or an alternative connection such as a Bluetooth or GPRS connection may be used as a backup connection for the first connection 103, 103'. If only one communication channel 103 with the server exists, the client 100 and agent 100' can share this connection. However, if such connection fails no further back up may exist.

The two redundant communication connections 103, 103' in the system 150 are the communication connection 103 between user resource control apparatus 100 and server 110 or the communication connection 103 between client 100 or user applet 100 and cloud 110, i.e. the connection Client<->Cloud, and the communication connection 103' between remote resource apparatus 100' and server 110 or the communication connection 103' between NFC controller 100' or agent 100' and cloud 110, i.e. the communication connection Agent <-> Cloud. By combining the cloud connections 103, 103' with the NFC interaction 104 all three end-points 100, 100', 110, i.e. end user applet 100, NFC resource controller 100' and cloud 110 can be aligned with the same information. After the NFC communication and the data exchange with the cloud all parties involved in an action for granting access to a resource 107 have the same minimum information. Therefore, after bringing client 100 and agent 100' into close contact every entity 100, 100', 110 has a set of information available. The set of information can be a quadruple comprising the factors of client position, UID, agent position and RID. In order to increase the reliability, further factors such as a timestamp for the position information or a PIN can be added. For a secure access grant the minimum information needed may be the UID, RID and the corresponding positions.

The system 150 may be robust in case of multiple failures. For example in case of failures of both connectivity channels 103, 103', failure due to wrong credentials of the user, or due to unavailability of the resource, access is not granted and the user is informed of the reason. In other words, a near field communication data exchange of GPS or GNSS position information combines NFC technology with a localisation function and provides a NFC verified position detection. Sharing data on a cloud by using a resilient communication connection 103, 103' in combination with NFC exchange 104, 104' provides a resilient access grant mechanism based on user identity UID or CID and relative position of the client and of the resource.

The server 110 has a server communication device 113 for setting up or for establishing the cloud communication connections 103, 103'. The cloud communication connections 103, 103' can be wireless or wire based. In particular the communication connection 103, 103' can have a sending channel 103a, 103'a for sending information to the resource control apparatus 100, 100' and a receiving channel 103b, 103'b for receiving information from the resource control apparatus 100, 100'.

The resource control system 100 comprises at least three sub-systems 100, 100', 110 or entities 100, 100', 110, i.e. a user resource control apparatus 100, a remote resource control apparatus 100' and a server 110. The remote resource control apparatus 100' can be realized as a hardware device 100' or as an "NFC Controller" 100'. The remote resource control apparatus 100' comprises a position determining device 101' or a satellite receiver 101' for receiving position information in a satellite connection 120' via an antenna 116'. The remote resource control apparatus 100' also comprises a communication device 102' including a NFC interface 115' and a wireless communication interface 114'. Furthermore, the remote resource control apparatus 100' comprises an actuator 105 for controlling a resource 107 or the power supply 106 of a resource. For controlling the remote resource control apparatus a software program, a so called Local Agent, is running on the remote resource control apparatus 100'. The Local Agent 100' and the User Applet 100 may comprise program code of the method for controlling a resource. Since the client and agent can both be realised either in hardware and/or software reference signs 100 and 100' are used for both hardware and software.

The user resource control apparatus 100 can be based on a smartphone technology on which an application, or applet, is loaded that controls a position determining device 101 and a communication device 102 of the smartphone 100. The position determining device 101 may be a GPS or GNSS module 101 of the smartphone. The communication device of a smart phone may be a combination of a mobile communication module providing a mobile communication interface 114 and an NFC module providing a near field communication interface 115. The mobile communication interface may be a GSM, UMTS, LTE or any of the wireless interface modules of the smartphone. By combining the components 101, 114, 115 of a smartphone the application can implement an NFC Secure Access Method.

The server 110 can run a software program executing a method for operating a server and implementing the decision algorithm applied on the compound key. The server 110 may be adapted to process data on a cloud database 111, 112.

The resource control system 150 permits a user resource apparatus 100 or a "User" to access and/or to control a generic "resource" 107 via a smartphone application, also called client application. The access is triggered by a touchless interaction with a client resource control apparatus 100' and the agent resource control apparatus 100', based on near field communication 104. The method for operating the server can be named NFC secure key algorithm. This method running on server hardware my ensure that access to the resource 107 and the control of the resource is granted only if the resource 107 is available and the user credentials fulfil the criteria programmed in the secure key algorithm. The resource 107 may be available if the agent resource control apparatus is available, which controls the resource. The availability of a resource can be determined by a reservation schedule of the resource.

Before access to the resource is granted criteria for the user credentials are verified. These user credentials comprise position of a user determined by a user resource control apparatus. This information is verified by a NFC connection 104. The credentials further comprise an identity of a user or an UID verified by NFC. Furthermore, the position of the user determined by the user position determining device 101 is correlated with the position of the resource 107 determined by the remote position determining device 101'. Thus the position of the user position determining device 101 can be compared to the position of the remote position determining device 101'.

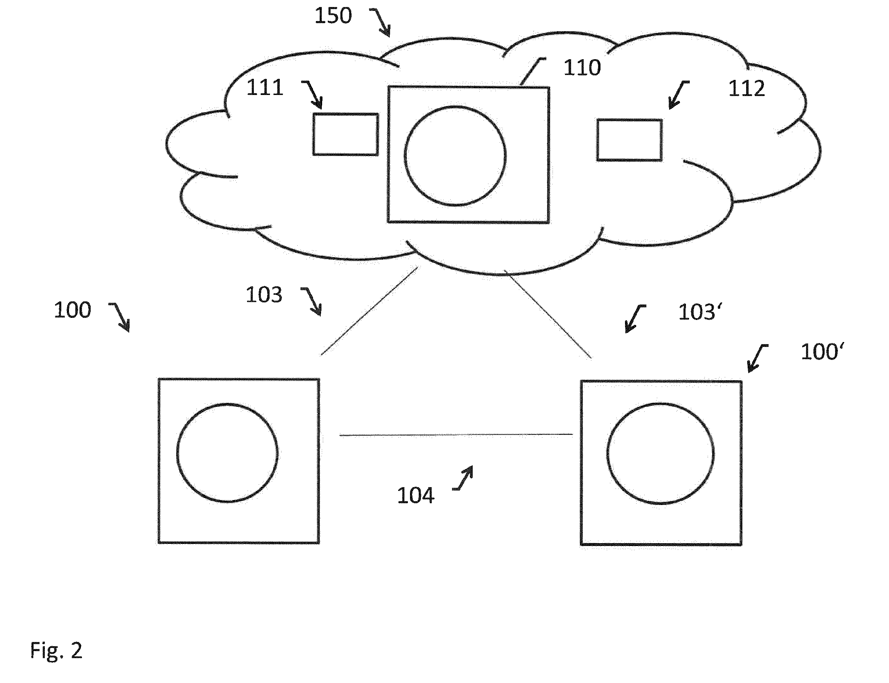

Fig. 2 shows a server apparatus 110 comprising a user database 111 and a resource database 112 according to an exemplary embodiment of the present invention. The user database 111 comprises a user credential table. Every user or every user resource control apparatus 100 participating on the resource control system 150 has an individual user identifier UID or client identifier CID and is registered in the user database 111. Every resource, every agent 100' or every remote resource control apparatus 100' participating on the resource control system 150 has an individual resource identifier RID and is registered in the resource database 112. The user database 111 and the resource database 112 are updated via the cloud communication connections 103, 103'. Every UID or CID identifies a data set in the user database 111. A data set is a line in the user database 111 or in the user credential table 111.

An example of a structure of a user credential table 111 is provided in Table 1. Every RID identifies a data set in the resource database 112. A data set is a line in the resource database 112 or in the resource table 112. An example of a structure of a resource table 112 is provided in Table 2.

The first column in a user table is a numeric value as the UID or CID. The structure of the numeric value of the CID can be the same as the structure of a RID. The server may have a plausibility routine that ensures that every UID, CID and/or RID is only used once so that the CID, UID or RID are individual identifier for a resource control apparatus. The second column is a text field indicating the current status of the resource control apparatus belonging to the corresponding CID. The third column records the last known position determined by the position determining device 101, 101' and communicated to the server after an NFC interaction. In the fourth column a Boolean value is stored that shows if the actual or current position of the client has been verified. A fifth column is provided for storing a PIN. Further columns are provided to add more user factors to be verified. By combining different columns of the database entries of Table 1 or 2 different rules can set up for granting access to a resource. Thus many possibilities exist to adapt the resource control system 150 to each individual access grant scenario. A GUI (graphical user interface) can be provided to allow an operator of a resource control system setting up their own rules to verify the different desired factors. The minimum information provided is the UID or CID and the corresponding client position for the user database and the RID and the resource position for the resource database.

**Table 1 - User Table**

| CID | Client Status | Client position | Position Validation | Position Timestamp | PIN | Other user Factors | decryption key |
|---|---|---|---|---|---|---|---|
| [Numeric] | [text] | [Coordinates] | [Boolean] | [time] | [Numeric] | [text] | text |

**Table 2 - Resource Table**

| RID | Resource Status | Resource position | Position Validation | Position Timestamp |
|---|---|---|---|---|
| [Numeric] | [text] | [Coordinates] | [Boolean] | [time] |

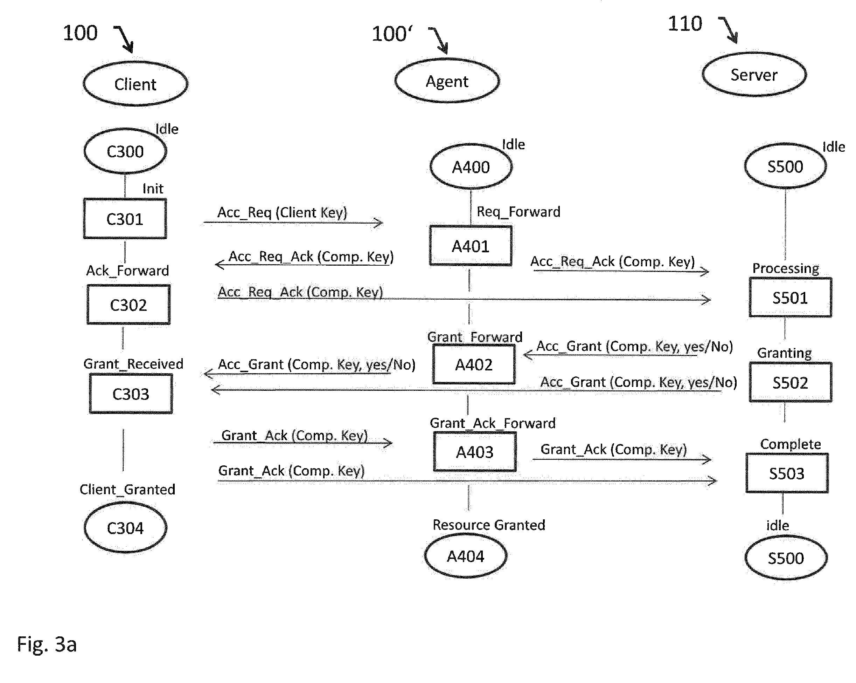

Fig. 3a shows a flow chart for a method for controlling a resource according to an exemplary embodiment of the present invention. In particular an access method or a location based access method. The status of the client 100 changes from idle C300 to Init C301 after a NFC connection has been initiated. The NFC connection changes the agent state from idle A400 to Req_Forward A401 where the agent waits for receiving an access request message from the client.

After the NFC connection has been set up the access method or method for controlling a resource provides in step C301 the sending of the access request message from the client 100 to the agent 100'. The client 100 sends the access request message via the previously established NFC connection to the resource access control agent 100' in order to get access to the resource 107 connected to the agent 100'. In other words, if client 100 realizes that it is in close proximity to agent 100' the set up of NFC connection is triggered and the method jumps from idle state C300 to init state C301. In step C301 the client determines its role and after the client realizes that it is a client it sends out the Acc_Req message.

One example of the format of the message "Access Request" (Acc_Req) that is sent from the client 100 to the agent 100' is shown in Table 4. The Acc_Req message or the access request message comprises a message sequence number, a message identifier, a key, a server instance and a Boolean variable indicating whether access is granted.

**Table 4 - Format of Access Request**

| Msg sequence number | Message Identifier | Key | Server Instance | Access Grant |
|---|---|---|---|---|
| [numeric] | [text] | [string] | [string] | [Boolean] |
| 000001 | Access Request | Client Access Key | Resource-based Client-based Remote Address | Yes/No |

Table 5 shows one exemplary embodiment of a format of the "Client Access Key". The client access key is a key comprising at least the client ID CID or UID and the client position determined by the client position determining device 101. Other access factors such as a PIN can be added in order to increase the security of the key.

**Table 5 - Format of Client Key**

| CID | Client position | Position Validation | Position Timestamp | PIN | Other user Factors |
|---|---|---|---|---|---|
| [Numeric] | [Coordinates] | [Boolean] | [time] | [Numeric] | [text] |
| 00000001 | Lat.., Long | Yes/No | 00:00:00 | xxxx | Fingerprint sensor |

The close contact between client 100 and agent 100' is also detected in agent 100' and the agent method jumps from idle state A400 to stage A401. In state A401 the agent realizes its role as agent and waits for receiving an Acc_Req message from the client. The Resource Access Control Agent 100' receives the Access Request comprising the Client Key. The agent uses the provided Client Key for forming a "Compound Key", by accumulating attributes of the client and attributes of the agent 100'. The client key can be a part of the compound key.

The Resource Control Agent 100 in step A401 sends an access request acknowledgement message back to the client 100. The Access Request Acknowledge or Access Request Acknowledgement (Acc_Req_Acc) comprises the compound key generated by the agent 100'. In another example, e.g. if the agent is realised as a passive device, (not shown in Fig. 3a) the client can be adapted to generate the compound key and the agent only provides its position information and its identifier. Without any restriction of the general concept in Fig. 3a a scenario is described where the agent 100' composes the compound key. The format of the Access Request Acknowledge message is shown in Table 6.

**Table 6 - Format of Access Request Acknowledge Message (Acc_Req_Ack)**

| Msg sequence number | Message Identifier | Key | Server Instance | Access Grant | Pairing |
|---|---|---|---|---|---|
| [numeric] | [text] | [string] | [string] | [Boolean] | [String] |
| 000002 | Access Request Ack | Compound Key | Resource-based | Yes/No | Resource Client All |
| | | | Client-based | | |
| | | | Remote Address | | |

The Access Request Acknowledge message comprises the message sequence number that can be the same as the message sequence number of the corresponding access request message. Furthermore a message identifier is provided marking the message as an access request message. In addition the compound key generated by the agent is provided. The access request acknowledgement message also comprises the corresponding server instance and a Boolean value showing the actual access grant status. Furthermore, a field is provided indicating the pairing mode.

Table 7 shows an exemplary embodiment of a format of the "Compound Key". The compound key comprises as minimum information the CID or UID, the RID, the resource position and the client position. The position timestamp can be used as an additional factor in order to increase the reliability of the access grant method. Also a timestamp indicating the time of the last status update can be provided. The compound key can also comprise a Boolean value indicating whether the actual positions have already been validated. In order to increase the security level further factors can be added to the compound key.

**Table 7 - Format of Compound Key**

| RID | Resource Status | Last status update | Resource Position | CID | Client position | Position Timestamp | Position Validation | PIN | Other user Factors |
|---|---|---|---|---|---|---|---|---|---|
| [Num] | [Text] | [Time] | [Coord.] | [num.] | [Coord.] | [Time] | [Boolean] | [num.] | [text] |
| xxxx | available /Busy | timestamp | Lat.., Long | xxx1 | Lat.., Long | timestamp | Yes/No | xxxx | xxxx |

The following tables provide an explanation of the field used in the different messages. Table 8 describes the fields of the Access Request message. Table 9 describes the meaning of the fields in the "Client Key".

**Table 8 - Fields of "Access Request"**

| **Fields of the message "Access Request"** | **Description** | **Value range** | **Notes/Default Value** |
|---|---|---|---|
| Msg sequence number | Indicates the sequence number of the message | 1-64 | It's increased by one at any acknowledge |
| Message Identifier | Indicates the type of the message | Access Request | |
| | | Access Request | |
| | | Acknowledge | |
| Key | Indicates the value of the Access Key provided by the Client | String | It's composed by many fields |
| Server Instance | Indicates if the Server instance is running on the local device, or it is numing remotely. In case it's running remotely the IP Address of the remote server is provided | Resource-based Client-based Remote Address | In case the server instance is running on a local device, then the Fast Access Grant is possible |
| Access Grant | Indicates the result of Access Grant Decision Algorithm. | Access=TRUE | In case the Access decision algorithm is not executed the value is False |
| | | Access=FALSE | |

**Table 9 - Fields of "Client Key"**

| **Field of the Client Key** | **Description** | **Value range** | **Notes/Default Value** |
|---|---|---|---|
| CID | Client Identifier | Not Applicable | It can be associated to the phone number, automatically read by the Client Applet. |
| Client Position | Position of the Client 100 retrieved from the positioning system of the Client device | Coordinates: | Default Value, in case the positioning system of the client device doesn't work, or the position is not fixed Longitude=0 Latitude =0 |
| | | Longitude | |
| | | Latitude | |
| Position Validation | Indicates if the position has been validated by a second independent positioning system | Boolean Yes/No | Default Value = No |
| Position Timestamp | Timestamp of the instant of the fixing of the position | Time with precision in seconds | 00:00:00 |
| PIN | Number inserted by the user on the Client Device | 0000-9999 | |
| Other user factor | Authentication Factor alternative to the PIN insertion. It may be the fingerprint, if supported | 64bit encodig | |

Table 10 shows the meaning of the fields in the access request acknowledgement message. This message represents the acknowledgement that the Access Request has been received by the agent 100' from the client 100'. The compound key or compound access key comprises substantially all the necessary information to apply the Grant Decision algorithm in the server or in a server entity.

**Table 10 - Fields of "Access Request Ack"**

| **Fields of the message "Access Request Ack"** | **Description** | **Value range** | **Notes/Default Value** |
|---|---|---|---|
| Msg sequence number | Indicates the sequence number of the message | 1-64 | It's increased by one at any acknowledge |
| Message Identifier | Indicates the type of the message | Access Request | |
| | | Access Request | |
| | | Acknowledge | |
| Key | Indicates the value of the Compound Access Key, composed by the Client Key and the information of the Requested Resource | String | It's composed by many fields |
| Server Instance | Indicates if the Server instance is running on the local device, or it is running remotely. In case it's running remotely the IP Address of the remote server is provided | Resource-based | In case the server instance is running on a local device, then the Fast Access Grant is possible |
| | | Client-based | |
| | | Remote Address | |
| Access Grant | Indicates the result of Access Grant Decision Algorithm. | Access=TRUE | In case the Access decision algorithm is not executed the value is FALSE |
| | | Access=FALSE | |

Table 11 describes the fields of the compound key or the compound access key.

**Table 11 - Fields of Compound Key.**

| **Field of the Compound Key** | **Description** | **Value range** | **Notes/Default Value** |
|---|---|---|---|
| RID | Resource Identifier | Not Applicable | It can be associated to the phone number, automatically read by the Client Applet. |
| Resource status | Indicates the Status Identifier | available /Busy out of service | |
| Last Status Update | Timestamp of the last status update | | |
| Resource Position | Position of the Resource retrieved from the positioning system of the Resource Controller | Coordinates: | Default Value |
| | | Longitude | Longitude=0 |
| | | Latitude | Latitude =0 |
| CID | Client Identifier | Not Applicable | It can be associated to the phone number, automatically read by the Client Applet. |
| Client Position | Position of the Client retrieved from the Client device | Coordinates: | Default Value |
| | | Longitude | Longitude=0 |
| | | Latitude | Latitude =0 |
| Position Validation | Indicates if the position has been validated by a second independent positioning system | Boolean Yes/No | Default Value = No |
| Position Timestamp | Timestamp of the instant of the fixing of the position | Time with precision in seconds | 00:00:00 |
| PIN | Number inserted by the user on the Client Device | 0000-9999 | |
| Other user factor | Authentication Factor alternative to the PIN insertion. It may be the fingerprint, if supported | 64bit encodig | |

Fig. 3a also shows a method for operating a server in the form of a flow chart according to an exemplary embodiment of the present invention. In particular Fig. 3a shows the Access Grant Decision algorithm executed by the Server 110.. The server may run in any of the endpoints 100, 100' or run remotely on the cloud. In other words, the method for operating a server or at least a part of it may be executed in parallel on the hardware used for a resource control apparatus or on separate server hardware. The server may run in parallel to the client 100 on a smartphone and/or in parallel to the agent 100' on a NFC Controller hardware.

The protocol will evolve differently depending on the server location and thus the method may be executed differently depending on the server location. In a first option (not shown in Fig 3a) in the case that the server is running only on the Client 100, i.e. the client resource control apparatus 100 also comprises the server 110, the Resource Agent 100' may work passively, i.e. as slave unit, and will send back the compound key with an indication indicating that there is no Resource Control Server assigned yet. In this case, the client 100 receives back the Compound Key in step C302, and sends in step C302 corresponding to stage Ack_Forward the Compound Key directly to the Server 110 in order to trigger the Access Decision algorithm. The client uses an access request acknowledgement message to send the Compound Key to the server. After receiving the compound key, the server changes from idle state S500 to processing state S501. In a second option (not shown in fig. 3a) in case the server 110 is running on the agent resource controller device 100', the Compound Key will be processed by the Grant Decision algorithm of the server entity running on the agent and the result will be sent back to the Client 100. In a third option (not shown in Fig. 3a) the server instances can run both on the Client Device 100 and on the Resource Controller device 100' and the Access grant Decision algorithm is applied on both endpoints. If the result with regard to granting access of the two instances of the algorithms matches, this result is taken as valid and unambiguous result. In another example, if the result to multiple instances of the algorithm does not match, the server with the most recent timestamp regarding the resource status update will prevail.

In case both the Client and the Resource Agent are connected to a remote server running on its own server hardware or in the cloud as shown in Fig. 3a, the compound key is forwarded to the server from both units, via multiple communication channels. In other words, if both channels 103 and 103' are present, the system has a redundant channel that make the system tolerant to a single fault on one channel. The Resource Agent 100' may work passively, i.e. as slave unit, and will send back the compound key with an indication indicating that there is no Resource Control Server assigned yet. In this case, the client 100 receives back the Compound Key in step C302, and sends in state C302 corresponding to state Ack_Forward the Compound Key directly to the Server 110 in order to trigger the Access Decision algorithm.

Every participant of the resource control system 150 needs to be registered with its UID or RID. A user may register a user resource control apparatus 100 or an application 100 running on a smartphone in order to associate the user resource control apparatus 100 with a UID. A UID may be an IMEI of a SIM used as communication interface 114. A resource or a resource operator may registers a remote resource control apparatus 100' or a local agent 100' running on a controller 100' in order to associate the remote resource control apparatus 100' with an RID.

A generic user, in order to request access to a resource, moves his client resource control apparatus 100 or user apparatus 100 close to the remote resource control apparatus 100' or resource apparatus 100' that is connected with the resource 107 in order to trigger touchless interaction. If the user resource control apparatus 100 is in the proximity of a few centimetres of the remote resource control apparatus 100' automatically a near field communication connection 104 is established between both apparatus 100, 100'. The portable device also includes one or more air interfaces, such as near field communications (NFC), WIFI (e.g., wireless local area network (WLAN), Bluetooth and/or communication devices that are based on the Institute of Electrical and Electronics Engineers' (IEEE) 802.11 standard. WIFI and Bluetooth can be more convenient than NFC for users, since the limited communication range of NFC requires the portable device to be in close proximity to the POS device, e.g., within 3 to 6 inches. WIFI and Bluetooth, have good characteristics for maintaining the link over time.

A short range connection 104, in particular NFC, however may always be involved to trigger the access request. For this reason in this text NFC is used to describe as an example for the initiation of the Access Request. However, it is not intended to exclude other communication technologies. In an example the NFC connection may only be used to trigger the Access Request and after that trigger the procedure may be completed using other wireless connection, if available. In other words, in order to get results that could be verified with one another at least one short range connection is included in the process of exchanging position information.

During the period the NFC connection 104 is established the user apparatus 100 transmits via an uplink 104a the UID of the user apparatus 100 together with the newest position information received via position determining device 101. A similar process is triggered on the resource apparatus 100' by establishing the near field connection 104. During the period the NFC connection 104 is established the resource apparatus 100' transmits via downlink 104b the RID of the resource apparatus together with the newest position information received via position determining device 101'.

The user apparatus 100 and the resource apparatus interpret the touchless interaction as an access request command from a user requesting the access of the user operating the user apparatus 100 to the resource 107 controlled by the resource apparatus 100'. After exchanging of information the user apparatus 100 sends an access request acknowledge command comprising the UID, the RID, the position of the user apparatus 100 and the position of the resource apparatus 100' via the cloud connection 103 to the cloud 110. In parallel, the resource apparatus 100' sends an access request acknowledge command comprising the RID, the UID, the position of the resource apparatus and the position of the user apparatus 100 via the cloud connection 103' to the cloud 110.

The decision algorithm of the cloud 110 or server 110 compares and correlates the entries in the user database 100 and the entries in the resource database 112 with the provided information of the user apparatus 100 and the resource apparatus 100'. For the entries in the user database 100 the user credentials and the position are verified by using the information received via connection 103, 103b. For the entries in the resource database 112 the availability of the resource is verified by using the information received via connection 103', 103'b. In case of a broken connection 103, 103' all information is distributed via the other connection 103, 103'. In other words, every access request command is transmitted via two connections 103, 103' in parallel. The transmitted access request commands are composed by different apparatuses 100, 100'.

If the user credentials are valid and if the resource is available at the desired time the server 110 or the cloud 110 sends an access grant command in the form of an access grant message (Acc_Grant) via cloud connection 103a, 103'a in parallel to the user apparatus 100 and the resource apparatus 100'. The access grant message may have a similar format as the access request acknowledge message shown in Table 10, wherein the Access Grant Boolean variable is set to the value TRUE. After receiving the access grant command the user apparatus 100 and the resource apparatus 100' are in a paired mode, i.e. the user apparatus 100 can control the resource apparatus. The status of the pairing mode may be indicated by the pairing field of the access request acknowledge message of Table 6. The user apparatus can be used as operating tool and can receive inputs from a user, and send commands to the resource apparatus to control the resource 107 and can also use a display on the user apparatus in order to provide status information.

After the pairing of the apparatuses 100, 100' has been requested by bringing them in touchless contact the NFC connection can be shut down. In other words after the access request or the pairing request has been made the user apparatus 100 can be removed from the resource apparatus 100'. In one example the user apparatus is removed from the radius around the resource apparatus where the NFC connection is effective and the NFC connection is shut down. Once the NFC pairing with the exchange of the compound key has been established any further communication can be made via the cloud connection 103, 103' or any other connection that has been established between user apparatus 100 and resource apparatus 100' and the NFC connection 104 is not necessary anymore and can be released.

In one example access is to be granted to a bicycle or to a vehicle having a remote resource control apparatus 100'. The resource apparatus 100' is integrated into the bicycle and is connected with a lock of the bicycle as a controlled resource 107. The lock is operated by the power source 106 for example a dynamo of the bicycle. In this scenario a user may want to use the bicycle. The user moves his smartphone 100 into the near vicinity of resource apparatus 100' in order to trigger the execution of the method for controlling a resource. The energy to activate the resource control apparatus 100' is provided by NFC energy harvesting, e.g. from nearby devices via NFC. In one example the device 100' is able to harvest energy via wireless radio waves, from a nearby NFC enabled smartphone 100, tablet 100 or other device 100 and/or computer 100. The harvested energy is sufficient to wake up an ultra-low power microcontroller that is adapted to use the provided energy to exchange data and to memorize data. Therefore, the resource control apparatus 100' or the agent 100' is also capable to store configuration data. The microcontroller is also capable of activating other parts of the circuit, and to activate a built in rechargeable battery or another power source if necessary. This battery is used to activate further parts of the circuit that cannot be powered only with the NFC harvested energy. The energy provided by the NFC connection may be sufficient to power a decision device in order to decide whether another power source has to be activated, e.g. for supplying energy for determining a position with the position determining device.

The movement of the smartphone that is used to establish the NFC or short range connection at the same time triggers the exchange of the UID and RID and corresponding position information and an update and access request inquiry to the user database 111 and the resource database 112.

After the access to the bicycle has been granted both the smartphone 100 and the resource apparatus 100' are informed about the grant of the access. The status of the access is displayed on a monitor of the smartphone 100 and the predetermined actuation of the resource 107 is executed by the control device 105 if the external power supply is available, e.g. by operating a dynamo or by a solar cell. For example if access is granted a lock of the vehicle or of the bicycle is released. The predetermined action may be defined as operating the resource 107, in this example opening lock 107 of the bicycle. The actuation that has to be executed by the resource 107 can be predetermined during the NFC connection 104 is active. The NFC connection may provide the power that is necessary to execute the desired actuation. The harvested energy is sufficient to apply configuration to the ultra-low power microcontroller. The configuration can be memorized or stored, and executed at later time, when further power source is available.

In an example the NFC connection can switch on and off the satellite receiver 101, 101' of the smartphone 100 respectively the satellite receiver 101, 101' of the resource apparatus 100'. The access grant decision is based on the transfer of user identity UID and user position data, exchanged via a touchless interaction between an end user applet 100 and a resource controller 100' with embedded positioning capability. The position of the User ID and Resource ID are both used as input for the Access Decision algorithm executed on the server or on an entity thereof. The Access Decision algorithm verifies the fulfilment of access criteria that may be stored as rules. One of the access criteria that the algorithm can apply is the requirement that the position fulfils certain requirements, also called Location Based Access Grant. In particular, the criteria can be based on the distance or radius between the client, i.e. the UID position and the RID position. The location based access grant may provide a high level of security if the position information provided by the position determining device 101 of the client or of the client positioning system 101 is validated or qualified by comparing the position of the client and the position of the resource. The validation of the client positioning system is obtained when, in correspondence of an Near Field Communication event between the client and the agent, the comparison of the two positions provide a distance coherent with the fact that the two endpoints are within a range of few centimetres at that moment of an established NFC connection. In other words, the positions are validated if the distance between the positions of the two endpoints calculated at the moment of the NFC interaction are determined as to be lower than the tolerance of GPS/GNSS, e.g. lower than 10 meters. Thus a short range connection with a physical range of lower than the tolerance range of the technology used for the position determination is appropriate to be used as a communication connection in order to verify the proximity of the client and the agent or to increase the reliability of access factors.

The direct connection 103, 103' to the cloud and the indirect connection to the cloud via the NFC 104 connection and the connection 103, 103' can be used as redundant connections to the cloud. In case one of the two legs looses the connectivity, the access method can still be executed and completed.

Referring again to the flowchart of Fig. 3a a method for accessing and controlling a resource is described. Fig. 3a shows in addition to the different steps executed in the different stages of the method the evolution and change of the status of the three entities involved, Client, Agent, and Server. Fig. 3a also shows the messages exchanged between the different entities. The method may be executed as an applet on a processor of a smartphone and/or as a local agent on a processor of a resource controller 100'. The resource controller 100' may be implemented as an embedded system that controls a satellite receiver component 116', a mobile phone component 114', an NFC component 115' and a control device 105 comprising physical or electrical switches.

The method starts with all the entities in an idle state, C300, A300 and S500.
In step C301 the NFC interaction occurs and the client 100 sends the Access Request message Acc_Req to the resource controller 100' or to the agent 100'.

The client 100 sends the Acc_Req message via NFC to the resource access control agent100'. The general format of the Acc_Req message is provided in Table 4. Table 12 shows a more specific format of the Acc_Req message or Access Request. Compared to Table 4, the Access Request message of Table 12 shows the individual fields of the Client Access Key. The Client Access Key used in Table 12 comprises the fields Client position, PIN and other user factors.

**Table 12 - Alternative Format of Access Request**

| CID | Message type | Client position | PIN | Other user Factors | Access Server | Access grant |
|---|---|---|---|---|---|---|
| [Numeric] | [Text] | [Coordinates] | [Numeric] | [text] | [Text] | [Boolean] |
| 00000001 | Access Request | Lat.., Long | 0001 | None | Remote | No |
| | | Client Access Key | | | | |

The Agent 100' changes from idle state A400 to state A401 after determining the NFC connection and receiving the Access Request including the Client Access Key from the client. After changing to state A401 the agent 100' creates the compound key (Comp. Key) and sends the message Acc_Requ_Ack (Access Request Acknowledge), including the compound key, via a first communication connection 300' to the server 110 and via a second communication connection 140 to the client 100. The first communication connection is independent from the second communication connection. However, in an example both connections can use the same physical infrastructure.

In an example the first connection 103, 103' is set up via a wireless component 114, 114'such as a GSM module, a UMTS module or an LTE module and the second connection 104 is set up via a near field component 115, 115' which reacts to a touchless contact. The near field component can be a NFC controller 115, 115' or a combination of a NFC controller and a Bluetooth controller in which combination the NFC is responsible for setting up and/or for configuring the Bluetooth connection and the Bluetooth connection is used for exchanging of the information. Instead of the NFC controller any other component could be used that is adapted to trigger an action in another device and to transfer the energy for this action and/or which has a short range. In case of a combination of NFC with Bluetooth, the NFC connection provides the energy to switch on a power supply necessary for the Bluetooth connection and provides the connection parameters such as a Bluetooth address. The radius within which the Bluetooth connection can work is about 10 m and therefore is greater than the radius of a near field component which can only operate in the range of a few centimetre, e.g. up to 5 cm. The NFC interaction starts when a user performs an explicit action, taking the two NFC endpoints in contactless range. This action is defined as "tap" action.

In step C302 the client 100 receives the Acc_Req_Ack from the agent 100' and forwards it on the first communication channel 103.

The Server starts in an idle state S500. After receiving the Acc_Req_Ack from at least one of the client and the agent the server 110 changes to the processing state S501. In state S501 the server decodes the compound key read from the Acc_Rec_Ack message and processes the information of the compound key by applying the grant decision algorithm.

If the method detects interaction between a user apparatus 100 and a resource apparatus 100' the method provides for elaborating a correlation or a relationship between the user related information and the resource related information. For example tests are made in order to find out whether the user apparatus 100 is eligible to access the resource apparatus 100'. If the result of an internal test is that the access can be granted or in general that a relationship between the user apparatus 100 and the resource apparatus 100' is permitted the method sends corresponding control information based on the correlation between the user related information and the resource related information via the user communication connection 103 and/or via the resource communication connection 103'. This control information can include an access grant confirmation and/or status information for a display.

After the relationship or the correlation between the user apparatus 100 and the resource apparatus 100' has been confirmed and access has been granted, the communication between the user apparatus 100 and the resource apparatus 100', e.g. for controlling a resource 107, can be via any communication connection that is set up between the user apparatus 100 and the resource apparatus 100'. Such a connection can be a separate connection such as a Bluetooth connection or one of the communication connections 103, 103' and does not have to be via the near field connection 104. The near field connection 104 may only be used for granting the access and for setting up the relevant communication connection. In other words, the near field connection can be used for authorizing the access to a resource. The communication distance where a NFC connection 104 is effective may be shorter than the reach of another connection such as GSM, UMTS, LTE or Bluetooth.

In step S502 the server sends the result of the decision algorithm via the message Acc_Grant indicating the status whether access is granted or not and including the compound key and the identifiers e.g. UID or RID. The Acc_Grant message is sent via the first communication connection 103 and 103'and/or via the second communication connection 104. After sending the Acc_Grant the server changes to state S503.

In Grant_Forward state A402 the agent 100' forwards the Acc_Grant (Access Grant) message with compound key and the identifiers RID and UID, and the result of the decision algorithm on the second communication connection 104, 104b to the client in parallel to the Acc-Grant message sent by the server 110. Thus, the client receives in the Grant_Received state C303 the access grant message via the short range connection 104 from the agent 100' as well as via the cloud connection 103 from the server 110. The identifier UID of the client method is an individual characteristic related to the client method and the identifier RID of the agent method is an individual characteristic of the agent method or of the other method. The identifiers can be used as a tag for the position information in order to specify the origin of the position information.

In state C303 the client 100 sends the Grant_Ack (Grant Acknowledge) indicating that the Acc_Grant message has been received to the agent and to the server. After sending out the grant acknowledge message the client changes to state C304, the Client_Granted state. In this state the access to the resource is granted for the client and the client can control the agent.

In state A403 the agent receives the Grant_Ack message of the client and forwards this message to the server. After the agent has forwarded the Grant_Ack message, the agent changes into the Resource Grant state A404 where the client is permitted to control the resource 107 via the agent.

After sending out the Acc_Grant message to the client and to the agent in state S502 indicating that the access has been granted the server changes to the Complete state S503. In the complete state the server receives the Grant_Ack message of the client and of the agent and changes back to the idle state S500. At this stage, the method is completed and the access is granted.

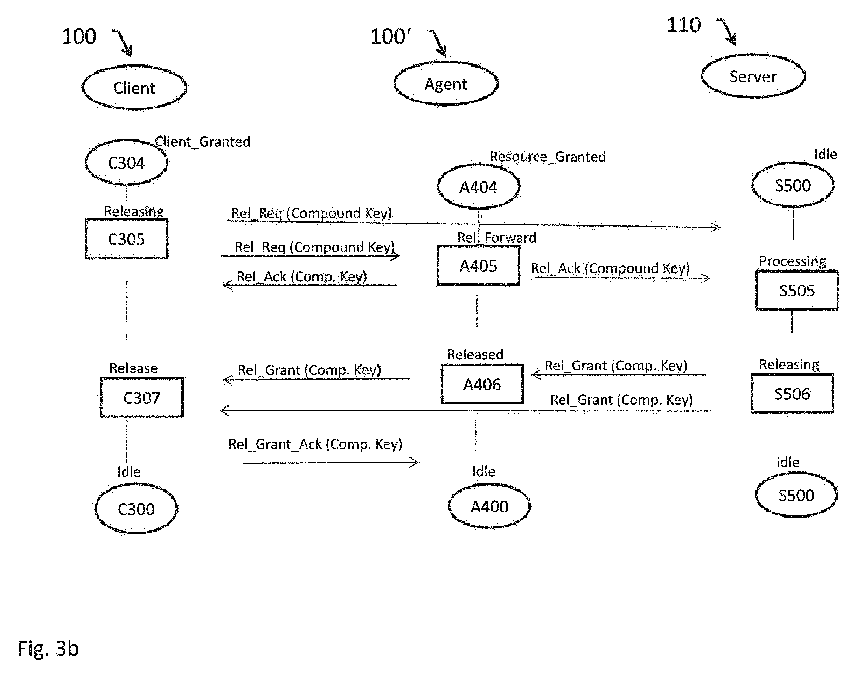

Fig. 3b shows a flowchart of a method for releasing a resource according to an exemplary embodiment of the present invention. The method for releasing the resource releases the relation between the client and the agent for accessing the resource. The method for releasing the resource releases the resource from a user and stops the connection between at least two resource control apparatuses. The flowchart shows the evolution of the status of the three entities 100, 100', 110 involved, the Client, the Agent, and the Server, and the message exchanged among them. Releasing the access to a resource may mean that a granted access relation between a client and an agent is released so that after the release process the relationship between the client and the agent does not exist anymore and the client has no granted access to the client any more.

The method starts with the client being in state Client_Granted state C304, the agent starts in Resource Granted state A404, and the server starts in Idle state S500. In state C305 the client initiates a release process by sending a Release Request message (Rel_Req) to the Resource Controller 100' and to the server 110. The release request message may be triggered by a contactless interaction or touchless interaction between the client 100 and the agent 100'. During this interaction a short range connection 103 is established and the Rel_Req (Release Request) message is exchanged between the client 100 and the agent 100' via this short range connection 103, e.g. a NFC connection. The interaction is executed between the client and agent that are associated with another by a previous access grant procedure.

The Agent 100' receives the Rel_Req message in the Rel_Forward state A405 and transmits a Rel_Req_Ack (Release Request Acknowledge) message including the compound key via the first communication channel 103' to the server and via the second communication channel 104 to the client 100. The compound key is newly generated in order to verify the release command.

After receiving the Rel_Req and/or the Rel_Ack message via first communication channels 103, 103' the server changes from the idle state S500 to the Processing state S505. In the Processing state the server 110 can evaluate the release request and decide whether to grant or refuse the request to release the control of the resource by the client. The result of the decision is provided in a Rel_Grant (Release Grant) message that is sent by the server 110 to the agent and to the client via the cloud connections 103, 103'. Before sending the release grant message the server changes from the Processing state S505 to the Releasing state S506. After sending the Rel_Grant message the server changes into Releasing state S506.

The client 100 receives the Rel_Grant message in Releasing state C305 and changes to the Release state C307. The agent receives the Rel_Grant message in Rel_Forward state A405 and changes to the Released state A406. In the released state any link or connection between the client and the resource is broken and the client cannot control the resource 107 anymore via agent 100'. The agent 100' receives a Rel_Grant_Ack message for confirming the release by the client and changes to the idle state A400. In the idle mode A400 the agent may be in a sleep mode and may be disconnected from any power supply waiting for another touchless interaction.

After the client sends out the Rel_Grant_Ack message the client changes to the idle state C300. When the Rel_Grant and the Rel_Grant_Ack are aligned on the client and on the agent the release process is complete, and the three entities are returned to the initial idle state C300, A400, 500.

It may be seen as an aspect of the invention to start or ignite and stop a communication relation with a communication technology whose physical reachable radius is limited to a shorter range than the limit of reachable radius of the communication technology that is used after the ignition of the connection. The physical range within which the short range connection is effective may be shorter than a tolerance range of the technology used for determining the position and also shorter than the range of another communication connection. In an example NFC may be used to set up a Bluetooth , a WiFi, a GSM or UMTS connection. A fixed line is considered as a connection with substantially endless reachable radius. The reachable radius of a wireless connection may depend on the transmission power and the quality of the used antenna. In one example the reachable distance is defined in the standard documentation of the technology on which the connection is based. For NFC communication the maximum reachable distance is defined in ISO ISO/IEC 14443.

NFC offers a low-speed connection with simple setup and can be used to bootstrap more capable wireless connections. NFC operates at slower transmission speeds than communication protocols with a larger range such as Bluetooth, but may consume less power and may do not require pairing. With a maximum working distance of less than 20 cm, NFC has a shorter range, which reduces the likelihood of unwanted interception. With NFC, instead of performing manual configurations to identify devices, the connection between two NFC devices is automatically established. The connection can be established very quickly e.g. in less than a tenth of a second. The maximum data transfer rate of NFC can be 424 kbit/s and may be slower than the transfer rate of Bluetooth V2.1, e.g. 2.1 Mbit/s.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. A resource control apparatus (100, 100'), comprising:
a position determining device (101, 101');
a communication device (102, 102');
wherein the position determining device (101) is adapted to determine position information of the resource control apparatus (100, 100');
wherein the communication device (102, 102') is adapted to setup a first communication connection (103, 103') and a second communication connection (104);
wherein the first communication connection (103, 103') is independent from the second communication connection (104);
wherein the communication device (102) is further adapted to send the determined position information via both the first communication connection (103, 103') and second communication connection (104);
wherein the communication device (102) is adapted to receive position information of another apparatus via the second communication connection (104);
wherein the communication device (102) is further adapted to send an identifier (UID, RID) of the resource control apparatus (100) via the second communication connection (104); and
wherein the communication device (102) is further adapted to receive an identifier (UID, RID) of the other apparatus (100') via the second communication connection (104);
wherein the identifier of the resource control apparatus (100) is an individual characteristic of the resource control apparatus (100); and
wherein the identifier of the other apparatus (100') is an individual characteristic of the other apparatus.

2. The resource control apparatus (100, 100') of claim 1, wherein at least one of the first connection (103, 103') and the second connection (104) is a near field connection, can be used to transfer energy, can be used to switch a power supply, can be used to switch a the status of the controlled resource, and/or can be used to trigger a physical action.

3. The resource control apparatus (100, 100') of claim 1 or 2, wherein the communication device (102) is further adapted to send both the identifier of the resource control apparatus (100) and the identifier of the other apparatus (100') via the first communication connection (103, 103').

4. The resource control apparatus (100, 100') of one of claims 1 to 3, wherein the communication device (102) and/or the position determining device (101) is adapted to switch from a standby mode to an operation mode when position information and/or the identifier of the other apparatus is/are received via the second communication connection (104);
wherein the operation mode provides a higher power supply to the resource control apparatus (100, 100') than the standby mode.

5. The resource control apparatus (100, 100') of one of claims 1 to 4, wherein the communication device (102) is further adapted to receive a signal with a relation between the identifier of the resource control apparatus and the identifier of the other apparatus via the first communication connection (103, 103').

6. The resource control apparatus (100, 100') of one of claims 1 to 5, further comprising:
an actuator device (105);
wherein the actuator device (105) is adapted to generate a physical force;
wherein the actuator device (105) can be controlled by a signal received via the first communication connection (103, 103') and/or via the second communication connection (104).

7. The resource control apparatus (100, 100') of one of claims 1 to 6, wherein the resource control apparatus (100, 100') is connected to a resource that is at least one of a charging station, a vehicle engine controller, a lock, a mobile device, a mobile phone, a smart phone, a credit card, a tag, an active apparatus, a passive apparatus and/or an application.

8. A resource control apparatus (100'), comprising:
a position determining device (101');
a communication device (102');
wherein the position determining device (101') is adapted to determine position information of the resource control apparatus (100');
wherein the communication device (102') is adapted to setup a communication connection (104);
wherein the communication device (102') is further adapted to send the determined position information via the communication connection (104);
wherein the communication device (102') is further adapted to send an identifier (RID) of the resource control apparatus (100') via the communication connection (104);
wherein the identifier of the resource control apparatus (100') is an individual characteristic of the resource control apparatus (100').

9. A method for controlling a resource, comprising:
determining position information of the the location where the method is executed;
setting up a first communication connection (103, 103') and a second communication connection (104);
wherein the first communication connection (103, 103') is independent from the second communication connection (104);
sending the determined position information via both the first communication connection (103, 103') and the second communication connection (104);
receiving position information of a location where another method for controlling a resource is executed via the second communication connection (104);
sending an identifier (UID, RID) of the method via the second communication connection (104);and
receiving an identifier (UID, RID) of the other method via the second communication connection (104);
wherein the identifier (UID, RID) of the method is an individual characteristic related to the method; and
wherein the identifier (UID, RID) of the other method is an individual characteristic of the other method.

10. A server apparatus (110), comprising
a user data base (111);
a resource database (112);
a server communication device (113);
wherein the user database (111) is adapted to store user related information of a first control apparatus (100);
wherein the resource database (112) is adapted to store resource related information of a second resource apparatus (100');
wherein the server communication device (113) is adapted to set up a user communication connection (103) with a first resource control apparatus (100) of one of claims 1 to 7 or 8 and a resource communication connection (103') with a second resource control apparatus (100') of one of claims 1 to 7 or 8 in order to update user related information and/or to update resource related information; and
wherein the server apparatus (110) is adapted to find a relationship between the updated user related information and the updated resource related information; and
wherein the server communication device (113) is adapted to send control information based on the relationship between the user related information and the resource related information via the user communication connection (103) and/or via the resource communication connection (103').

11. Server apparatus of claim 10, wherein the user communication connection (103) and the resource communication connection (103') use the same physical link.

12. A method for operating a server apparatus (110), comprising:
providing a user data base;
providing a resource database;
storing resource related information in the resource database;
storing user related information in the user database;
setting up a user communication connection (103) with a first resource control apparatus (100) of one of claims 1 to 7 or 8; and
setting up a resource communication connection (103') with a second resource control apparatus (100') of one of claims 1 to 7 or 8;
updating user related information and/or updating resource related information;
finding a correlation between the updated user related information and the resource related information; and
sending control information based on the correlation between the user related information and the resource related information via the user communication connection (103) and/or via the resource communication connection (103').

13. A program element, comprising program code, that is adapted, when executed on a processor, to execute at least one of the methods of claims 9 or 12.

14. Computer readable medium, comprising program code, that is adapted, when executed on a processor, to execute at least one of the methods of claims 9 and 12.
